# EUROPEAN PATENT APPLICATION

(11) **EP 4 502 285 A1**
(43) Date of publication of application: **05.02.2025**
(21) Application number: 23779721.2
(22) Date of filing: 17.03.2023
(51) Int. Cl.: E02F 9/00, E02F 9/08, E02F 9/20, B60K 1/04

(54) **SWIVELING WORK MACHINE**

(30) Priority: 31.03.2022 JP 2022060018; 31.03.2022 JP 2022060017; 31.03.2022 JP 2022060015; 31.03.2022 JP 2022060016
(71) Applicant: KUBOTA CORPORATION, Osaka-shi, Osaka 556-8601 (JP)
(72) Inventor: SATO, Fuminori, Sakai-shi, Osaka 590-0908 (JP); DATE, Masamitsu, Sakai-shi, Osaka 590-0908 (JP)
(74) Representative: Cabinet Beau de Loménie
(86) International application number: PCT/JP2023/010526
(87) International publication number: WO 2023/189704

(57) **Abstract**

In a swivel working machine (1), an impact load on devices mounted on a swivel base (2) can be reduced.

The swivel working machine (1) includes the swivel base (2), a battery unit (5) provided at a rear portion of the swivel base (2), a working device (4) provided in front of the swivel base (2) and to be driven by using electric power output from the battery unit (5), a rear portion exterior cover (20F, 20G, 20H) provided at the rear portion of the swivel base (2) to cover a side, facing rearward of a machine body, of a space in which the battery unit (5) is provided, and a reinforcement member provided inward of the rear portion exterior cover (20F, 20G, 20H) with respect to the machine body to prevent or reduce deformation of the rear portion exterior cover inward with respect to the machine body due to an external force.

## Description

### Technical Field

The present invention relates to a swivel working machine such as a backhoe.

### Background Art

A swivel working machine disclosed in PTL 1 is known.

The swivel working machine disclosed in PTL 1 includes a swivel base, a working device provided in front of the swivel base, a battery unit, an electric motor driven by electric power output from the battery unit, and a hydraulic pump that delivers hydraulic fluid in response to driving of the electric motor, and the battery unit, the electric motor, the hydraulic pump, other devices, tanks, and the like are provided in a space defined in the rear portion of the swivel base by an exterior cover.

### Citation List

### Patent Literature

PTL 1: Japanese Unexamined Patent Application Publication No. 2021-80708

### Summary of Invention

### Technical Problem

In this type of swivel working machine, because the battery unit is relatively heavy, no weight is mounted at the rear portion of the swivel base to maintain the weight balance between the front and rear of the machine body. Therefore, when an external impact is applied to the rear portion of the swivel base, there is a risk that a physical load is applied to the devices mounted on the swivel base, such as the battery unit.

In addition, in this type of swivel working machine, in addition to the battery unit, the electric motor, the hydraulic pump, and the like, a plurality of pieces of electrical equipment are also mounted, such as an inverter to regulate the electric power to be output to the electric motor. However, since these components are housed together in a limited space on the swivel base, also, power transmission harness that connects the components needs to be efficiently guided on the swivel base. In particular, a high-power harness that connects the inverter and the electric motor is required to be guided so as to be resistant to damage when vibrations occur during work or when the swivel base is subjected to an external impact.

Furthermore, in this type of swivel working machine, in addition to the battery unit, the electric motor, the hydraulic pump, and the like, electrical components such as an electrical box and a sub-battery are also mounted. However, since these electrical components require periodic inspection, replacement, and other maintenance work, they are required to be mounted at a position where an operator can easily access from outside the swivel base.

Furthermore, in this type of swivel working machine, in addition to the battery unit, the electric motor, the hydraulic pump, and the like, many electrical components such as a controller and an electrical box are also mounted. However, attaching these electrical components one by one at predetermined attachment positions on the swivel base is inefficient and prone to variations in attaching accuracy. Also, brackets corresponding to the respective electrical components are also required, which increases the number of components and the number of assembly steps.

The present invention has been made to solve such problems, an object of the present invention is to provide a swivel working machine that can reduce the impact load on devices mounted on a swivel base.

Another object of the present invention is to provide a swivel working machine that can avoid damage to a harness guided on the swivel base.

Another object of the present invention is to provide a swivel working machine that allows easy inspection of electrical components such as an electrical box and a sub-battery from outside the swivel base.

Another object of the present invention is to provide a swivel working machine that enables electrical components such as a controller and an electrical box to be attached to the swivel base with ease and precision.

### Solution to Problem

The present invention provides the following technical solution(s) to achieve the above object(s).

A swivel working machine according to an aspect of the present invention includes a swivel base, a battery unit provided at a rear portion of the swivel base, a working device provided in front of the swivel base and to be driven by electric power output from the battery unit, a rear portion exterior cover provided at the rear portion of the swivel base to cover a side, facing rearward of a machine body, of a space in which the battery unit is provided, and a reinforcement member provided inward of the rear portion exterior cover with respect to the machine body to prevent or reduce deformation of the rear portion exterior cover inward with respect to the machine body due to an external force.

The above swivel working machine may be provided with a buffer member between the reinforcement member and the rear portion exterior cover.

The rear portion exterior cover may include a sheet metal or resin.

The reinforcement member may include a central portion reinforcement member and a pair of side portion reinforcement members, the central portion reinforcement member being provided substantially at a center of the rear portion of the swivel base in a machine body width direction, the pair of side portion reinforcement members being provided at the rear portion of the swivel base and spaced apart from each other in the machine body width direction.

The above swivel working machine may include a support frame provided upright on the swivel base to support the rear portion exterior cover, and the central portion reinforcement member may be fixed to a rear portion of the support frame.

The support frame may have a rear frame portion provided upright rearward of the battery unit on the swivel base, and the central portion reinforcement member may be fixed to a rear portion of the rear frame portion and provided rearward of the battery unit.

The reinforcement member may include a substrate portion and a reinforcing plate portion, the substrate portion being fixed to a predetermined attachment portion, the reinforcing plate portion being provided on a rear portion of the substrate portion.

The side portion reinforcement members may be fixed to upright portions provided upright at left and right rear corner portions of the swivel base, respectively.

In the above swivel working machine, a sub-battery may be located at a first side portion, which is one of opposite side portions in the machine body width direction, of the rear portion of the swivel base, and one of the side portion reinforcement members that is located at a first side, which is one of opposite sides in the machine body width direction, is located rearward of the sub-battery.

The above swivel working machine may include an electric motor to be driven by the electric power output from the battery unit, the electric motor may be provided at a second side portion, which is one of opposite side portions in the machine body width direction, of the rear portion of the swivel base, and one of the side portion reinforcement members that is at a second side, which is one of opposite sides in the machine body width direction, may be located rearward of the electric motor.

The above swivel working machine may include a hydraulic pump to deliver hydraulic fluid in response to driving of the electric motor, and a hydraulic actuator to be driven by a hydraulic pressure of the hydraulic fluid to actuate the working device, the hydraulic pump may be located at the second side portion, and the one of the side portion reinforcement members that is at the second side may be provided rearward of the electric motor and the hydraulic pump.

A swivel working machine according to an aspect of the present invention includes a swivel base, a working device provided in front of the swivel base, a battery unit, an electric motor to be driven by electric power output from the battery unit, a hydraulic pump to deliver hydraulic fluid in response to driving of the electric motor, an inverter to regulate the electric power to be output to the electric motor, a harness to transmit electric power and connect the inverter and the electric motor to each other, an exterior cover to cover the battery unit, the electric motor, the hydraulic pump, the inverter, and the harness, and a support frame provided upright on the swivel base to support the exterior cover, and the harness is fixed to the support frame.

The harness may be guided along an inner surface of a rear portion cover of the swivel base.

The battery unit may be provided in a rear room provided at a rear portion of the swivel base, the support frame may include a rear frame portion provided upright in a rear portion of the rear room, and the harness may be guided forward of the rear frame portion in the rear room.

The battery unit may be provided at the rear portion of the swivel base, the electric motor may be provided at one side of the battery unit on the swivel base, the inverter may be provided above the battery unit, and the harness may be guided from the inverter, via a space located upward and rearward of the battery unit, to the electric motor.

The harness may be fixed via a clamp to the support frame provided upright on the swivel base.

The battery unit may be provided in the rear room provided at the rear portion of the swivel base, the electric motor may be provided at one side of the battery unit in the rear room, the support frame may include a rear frame portion and a side frame portion, the rear frame portion being provided upright in a rear portion of the rear room, the side frame portion being provided upright in a side portion of the rear room where the electric motor is provided, and the clamp may include a first clamp and a second clamp, the first clamp being fixed to the rear frame portion, the second clamp being fixed to the side frame portion.

The first clamp may be fixed with a fastening member to a clamp attachment portion of the rear frame portion from behind.

The rear frame portion may include a pair of rear frame portions provided upright at the rear portion of the swivel base and spaced apart from each other in a left-right direction, and the first clamp may be provided at each of the left and right rear frame portions.

The clamp may include a pair of pressing members abutting against an outer circumferential surface of the harness in a radially opposed arrangement, and the pressing members may each include an elastic material.

The pressing members may include concave surface portions each abutting against and extending along the outer circumferential surface.

The concave surface portions are arranged adjacent to each other in an up-down direction, and the clamp may fix, with the concave surface portions, electric wires of the harness to be spaced from each other in the up-down direction.

A swivel working machine according to an aspect of the present invention includes a swivel base, a working device provided in front of the swivel base, a first electrical component including an electrical box, and a second electrical component including a sub-battery, the first electrical component and the second electrical component are provided at a first side portion of the swivel base, and a first side portion cover, which is an exterior cover at the first side portion, includes a first inspection window and a second inspection window, the first inspection window being configured to allow inspection of the first electrical component, the second inspection window being configured to allow inspection of the second electrical component.

The first inspection window and the second inspection window may be arranged in a front-rear direction on the first side portion cover.

The first side portion cover may include a first inspection door and a second inspection door, the first inspection door being configured to open and close the first inspection window, the second inspection door being configured to open and close the second inspection window. The first inspection door may be pivotally supported on a side frame portion of the first inspection window that is closer to the second inspection window than the opposite side frame portion is. The second inspection door may be pivotally supported on a side frame portion of the second inspection window that is closer to the first inspection window than the opposite side frame portion is.

The above swivel working machine may include an operator's seat provided on the swivel base and a protection mechanism having an entrance at the first side portion to house the operator's seat, and the first inspection window and the second inspection window may be provided rearward of the entrance.

The protection mechanism may include an entrance door to open and close the entrance, the entrance door may be configured to open rearward from a closed position in which the entrance is closed, the first side portion cover may include a recessed surface portion to avoid contact with the entrance door that is fully opened, the second inspection window may be provided rearward of the recessed surface portion, and the first inspection window may be provided in the recessed surface portion.

The second inspection window may include a ventilation opening via which an interior and an exterior of the first side portion cover are in communication with each other.

The above swivel working machine may include a gas-liquid separation tank to store a heat transfer medium for heating, and the gas-liquid separation tank may be located at the first side portion of the swivel base such that the gas-liquid separation tank faces toward the first inspection window.

The first side portion cover may be removably fixed to a support frame provided upright on the swivel base.

An upper portion cover of the swivel base may be removably fixed to the support frame, and an upper fixing portion between the first side portion cover and the support frame may be provided at a position covered with the upper portion cover from above.

The above swivel working machine may include a battery unit, an electric motor to be driven by electric power output from the battery unit, and a hydraulic pump to deliver hydraulic fluid in response to driving of the electric motor.

A swivel working machine according to an aspect of the present invention includes a swivel base, a battery unit, a working device to be driven by electric power output from the battery unit and provided in front of the swivel base, a controller to control the electric power to be output from the battery unit, and an electrical box to house electrical equipment, and the controller and the electrical box are attached to a support frame provided upright on the swivel base via a single bracket.

The bracket may include a first attachment portion and a second attachment portion, the first attachment portion supporting the controller, the second attachment portion supporting the electrical box, and the first attachment portion may be provided below the second attachment portion.

The second attachment portion may include a fitting portion fitting and holding the electrical box.

The above swivel working machine may include a relay box to house a relay, and a bracket may include a third support portion to support the relay box.

The first attachment portion may include attachment portions at a first side surface and a second side surface to each of which the controller is attachable.

The controller and the electrical box may be provided at a first side portion of the swivel base.

A first side portion cover of the swivel base may include an inspection window to allow inspection of the electrical box.

The first side portion cover of the swivel base may be removably fixed to the support frame, and the electrical box may be provided inside the first side portion cover.

An upper portion cover of the swivel base may be removably fixed to the support frame, and an upper fixing portion of the support frame for fixing the first side portion cover may be provided at a position covered with the upper portion cover from above.

The controller may be positioned such that the controller faces an inner side of a lower portion cover provided under the first side portion cover.

The above swivel working machine may include an electric motor to be driven by the electric power output from the battery unit, a hydraulic pump to deliver hydraulic fluid in response to driving of the electric motor, and a hydraulic actuator to be driven by a hydraulic pressure of the hydraulic fluid to actuate the working device, and the controller may control operation of the electric motor.

### Advantageous Effects of Invention

With the above swivel working machine, the external impact on the rear portion of the swivel base can be absorbed by the reinforcement member. Accordingly, the impact load on the devices mounted on the swivel base is significantly reduced.

With the above swivel working machine, the harness is unlikely to interfere with the components on the swivel base due to vibrations during work, and the external impact is unlikely to be directly applied to the components on the swivel base. Accordingly, damage to the harness can be avoided.

With the above swivel working machine, the operator can easily access the electrical components such as the electrical box and the sub-battery from outside the swivel base. Accordingly, maintainability is significantly improved.

With the above swivel working machine, the electrical components such as an electrical device and an electrical box can be attached to the swivel base via a single bracket. Accordingly, the ease of assembly is significantly improved.

### Brief Description of Drawings

[FIG. 1] FIG. 1 is a left side view of a swivel working machine.
[FIG. 2] FIG. 2 is a top view of the swivel working machine.
[FIG. 3] FIG. 3 is a rear view of the swivel working machine.
[FIG. 4] FIG. 4 is a left front perspective view of a machine frame of a swivel base.
[FIG. 5] FIG. 5 is a left rear perspective view of the machine frame of the swivel base.
[FIG. 6] FIG. 6 is a left side view of the machine frame of the swivel base.
[FIG. 7] FIG. 7 is a top view of the machine frame of the swivel base.
[FIG. 8] FIG. 8 is a partially exploded perspective view of side portion reinforcement members and its surroundings.
[FIG. 9] FIG. 9 is a partially exploded perspective view of a central portion reinforcement member and its surroundings.
[FIG. 10] FIG. 10 is an end surface of the reinforcement members and its surroundings cut and viewed from above.
[FIG. 11] FIG. 11 is a left rear perspective view of the swivel base with an exterior cover partially separated.
[FIG. 12] FIG. 12 is a right rear perspective view of the swivel base with the exterior cover partially separated.
[FIG. 13] FIG. 13 is a top view of a left hood and its surroundings with a entrance door fully open.
[FIG. 14] FIG. 14 is a rear perspective view of the swivel base.
[FIG. 15] FIG. 15 is an exploded perspective view of clamps.
[FIG. 16] FIG. 16 is an exploded side view of the clamps.
[FIG. 17] FIG. 17 is a schematic diagram of a left frame portion and its surroundings viewed from a side.
[FIG. 18] FIG. 18 is a partially exploded perspective view of the left frame portion and its surroundings.
[FIG. 19] FIG. 19 is a left rear perspective view of an electrical bracket.
[FIG. 20] FIG. 20 is a perspective view of the left hood and its surroundings with a first inspection door open.
[FIG. 21] FIG. 21 is a partially exploded perspective view of the left hood and its surroundings with a second inspection door open.
[FIG. 22] FIG. 22 is a perspective view illustrating a modified example of a side portion reinforcement member.
[FIG. 23] FIG. 23 is a perspective view illustrating a modified example of the central portion reinforcement member.

### Description of Embodiments

Hereinafter, embodiments of the present invention will be described with reference to the drawings.

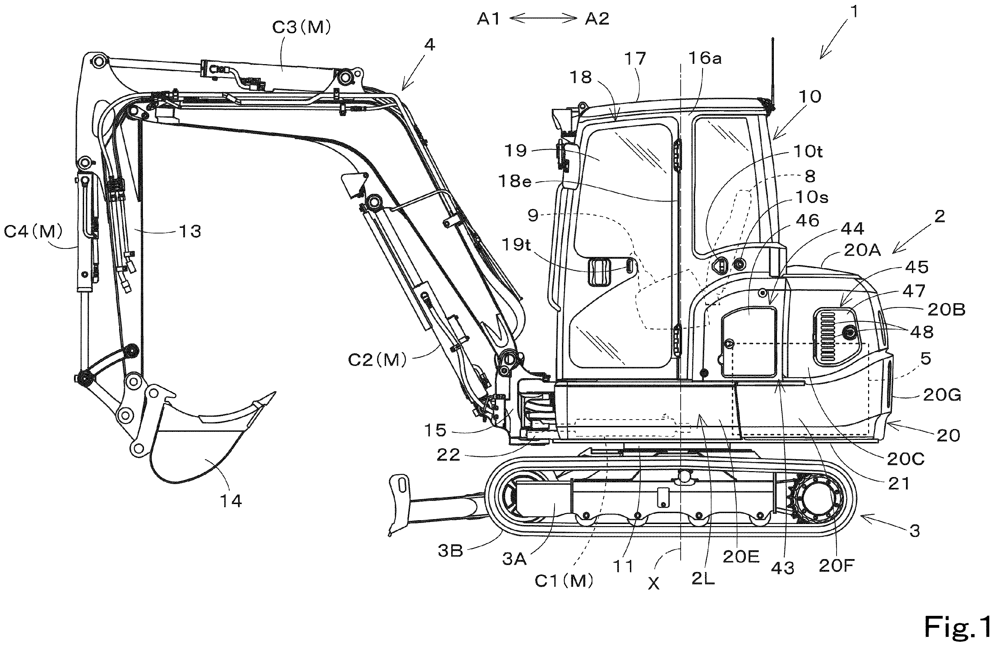

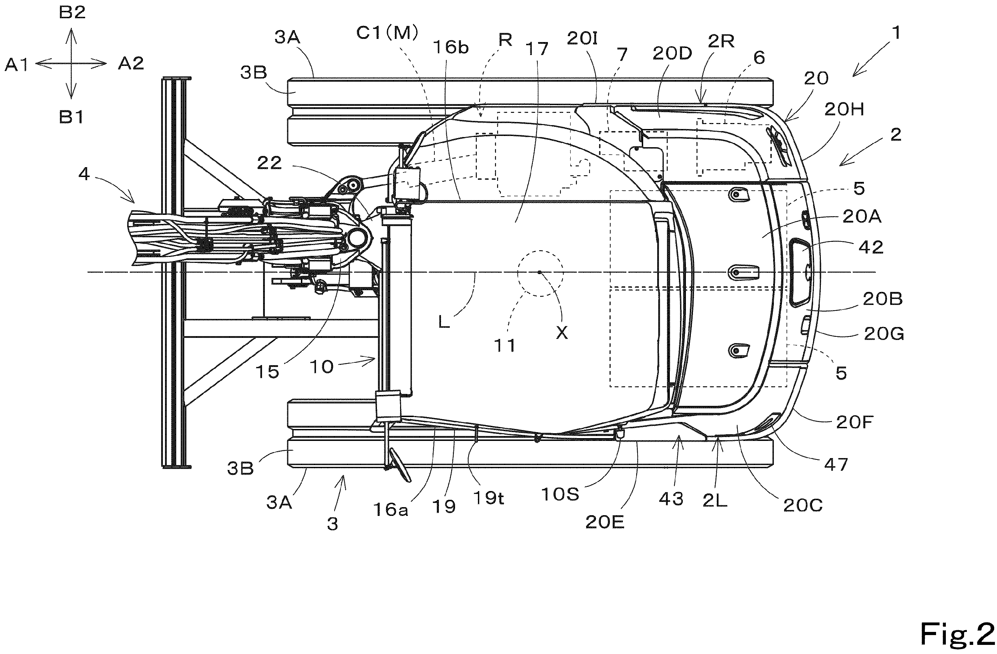

As illustrated in FIGS. 1 to 3, a swivel working machine 1 according to the present embodiment is, for example, a backhoe including a swivel base 2, a lower traveling body 3, and a working device 4. The swivel working machine 1 is an electric working machine that is driven by electric power and, as illustrated in FIG. 2, is equipped with at least one battery unit 5, an electric motor 6, a hydraulic pump 7, and the like. Furthermore, as illustrated in FIG. 1, the swivel working machine 1 includes an operator's seat 8 to be seated by an operator, an operation device 9 for operating the swivel working machine 1, and a protection mechanism 10 for protecting the operator's seat 8 and the operation device 9. Note that the swivel working machine 1 is not limited to a backhoe and may be another type of swivel working machine.

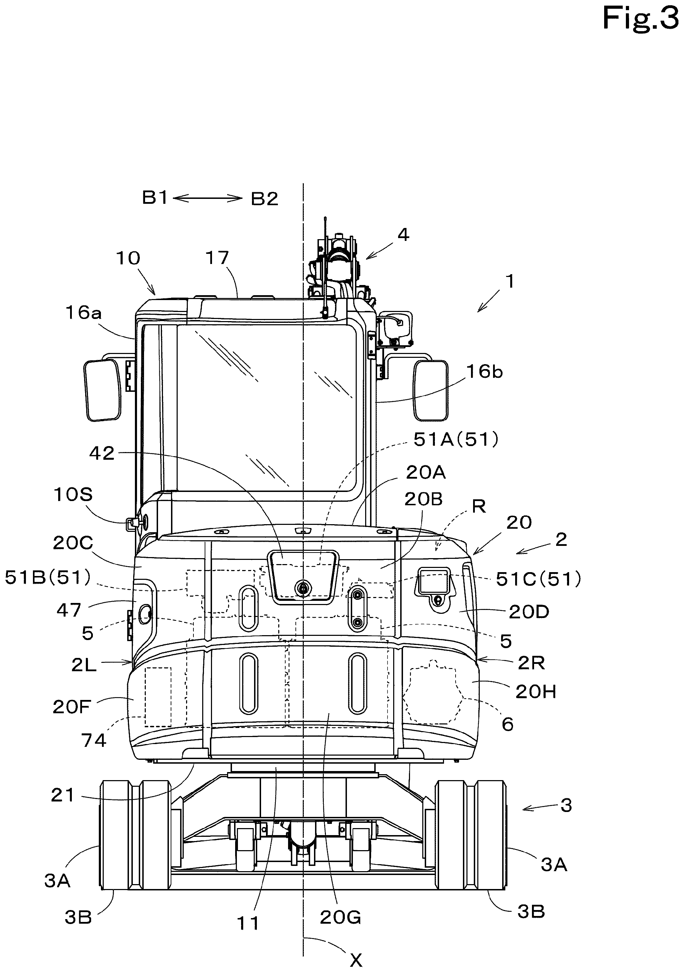

Hereinafter, the direction in which the operator seated on the operator's seat 8 faces (the direction of an arrow A1 in FIGS. 1, 2, and the like) will be referred to as the front, and the opposite direction (the direction of an arrow A2 in FIGS. 1, 2, and the like) will be referred to as the rear. In addition, the left of the operator (the direction of an arrow B1 in FIGS. 2 and 3) will be referred to as the left, and the right of the operator (the direction of an arrow B2 in FIGS. 2 and 3) will be referred to as the right. The left-right direction of the operator (the direction of the arrows B1 and B2 in FIGS. 2 and 3) corresponds to a machine body width direction of the swivel working machine 1.

As illustrated in FIGS. 1 and 3, the swivel base 2 is supported on the upper portion of the lower traveling body 3 via a swivel bearing 11 so as to be capable of swiveling in the left-right direction. That is, the swivel base 2 is supported rotatably about a swivel axis (vertically extending axis) X with respect to the lower traveling body 3. Note that the swivel axis X is the center of rotation of the swivel bearing 11.

As illustrated in FIG. 1, the lower traveling body 3 has a traveling frame 3A and a traveling mechanism 3B. The traveling frame (track frame) 3A is a structure to which the traveling mechanism 3B is attached and which supports the swivel base 2 from below. The traveling mechanism 3B is of a crawler type, for example.

The working device 4 is provided in front of the swivel base 2 and is driven by hydraulic fluid discharged from the hydraulic pump 7. Note that the hydraulic pump 7 is driven by the electric motor 6, and the electric motor 6 is driven by electric power output from the battery unit 5. That is, the working device 4 is driven by the electric power output from the battery unit 5. As illustrated in FIG. 2, the working device 4 is provided to the right of a center line L of the swivel base 2 in the left-right direction. The working device 4 is operated by the operation device 9.

As illustrated in FIG. 1, the working device 4 has a boom 12, an arm 13, and a bucket 14. The base end portion of the boom 12 is pivotally mounted to a swing bracket 15 provided in the front portion of the swivel base 2 so as to be rotatable about a horizontal axis (an axis extending in the left-right direction). That is, the boom 12 is pivotally connected to the swing bracket 15 so as to be swingable up and down. The base end portion of the arm 13 is pivotally mounted to the distal end portion of the boom 12 so as to be rotatable about a horizontal axis (an axis extending in the left-right direction). That is, the arm 13 is pivotally connected to the boom 12 so as to be swingable in the front-rear and up-down directions. The base end portion of the bucket 14 is pivotally mounted to the distal end portion of the arm 13 so as to be rotatable about a horizontal axis (an axis extending in the left-right direction). That is, the bucket 14 is pivotally connected to the arm 13 so as to be capable of shovel and dump operations. Note that the swivel working machine 1 can be equipped with another working tool (hydraulic attachment) that can be driven by the hydraulic fluid, instead of or in addition to the bucket 14. Examples of the other working tool include a hydraulic breaker, a hydraulic crusher, an angle broom, an earth auger, a pallet fork, a sweeper, a mower, a snow blower, and the like.

A hydraulic actuator (hydraulic cylinder) M, which is driven by the hydraulic pressure of the hydraulic fluid delivered by the hydraulic pump 7 and which operates the working device 4, is provided in a movable portion of a working system of the swivel working machine 1. The working device 4 is driven by the hydraulic actuator M. More specifically, the hydraulic actuator M includes a swing cylinder C1, a boom cylinder C2, an arm cylinder C3, and a bucket cylinder C4. The swing bracket 15 is capable of swinging by the extension and retraction of the swing cylinder C1 provided on the right of the swivel base 2. The boom 12 is capable of swinging by the extension and retraction of the boom cylinder C2. The arm 13 is capable of swinging by the extension and retraction of the arm cylinder C3. The bucket 14 is capable of shovel and dump operations by the extension and retraction of the bucket cylinder C4.

The operator's seat 8, the operation device 9, and the protection mechanism 10 are provided in the front portion of the swivel base 2. The protection mechanism 10 is a cabin that covers the surroundings of the operator's seat 8 and the operation device 9 and is, as illustrated in FIGS. 2 and 3, provided closer to a left side portion (first side portion) 2L of the swivel base 2 than to the opposite side portion. The protection mechanism 10 includes a left frame 16a defining the left side surface portion of the protection mechanism 10, a right frame 16b defining the right side surface portion of the protection mechanism 10, and a roof 17 defining the upper surface portion of the protection mechanism 10. As illustrated in FIG. 1, an entrance 18 and an entrance door 19 capable of opening and closing the entrance 18 are provided on the left frame 16a. The entrance door 19 is pivotally connected to a side frame portion 18e behind the entrance 18 by hinges or the like and is configured to open rearward from the closed position in which the entrance 18 is closed. Note that the structure of the protection mechanism 10 is not limited to the above configuration and may be a cabin with a two-pillar structure or a three-pillar structure, or may be a canopy.

As illustrated in FIGS. 1 to 3, the swivel base 2 includes an exterior cover 20, brackets, stays, and the like. The exterior cover 20 is a cover member that defines a space (rear room R) at the rear portion of the protection mechanism 10 in which devices, tanks, and other components are provided. The brackets, stays, and the like are members for attaching the above components and the like. The operator's seat 8, the operation device 9, and the protection mechanism 10 are provided in the front portion of the swivel base 2. As illustrated in FIG. 2, the battery unit 5, the electric motor 6, and the hydraulic pump 7 are provided rearward of the swivel axis X in the rear room R provided at the rear portion of the swivel base 2.

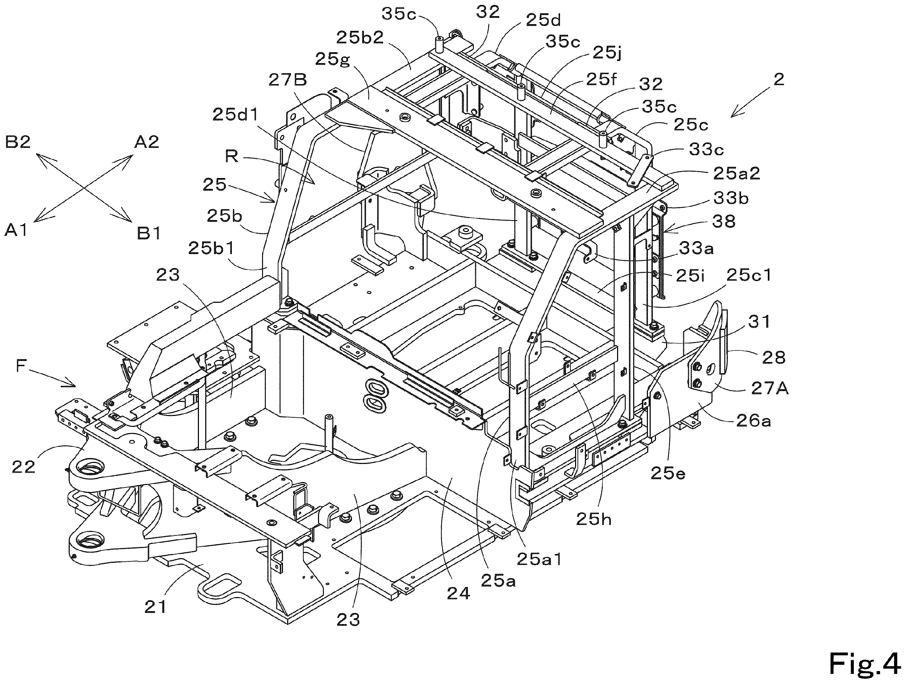

As illustrated in FIGS. 4 to 7, a machine body frame F of the swivel base 2 is a structure that supports the battery unit 5, the electric motor 6, the hydraulic pump 7, and the like and has a swivel substrate 21, a support bracket 22, at least one vertical rib 23, a partition plate 24, and a support frame 25. The swivel substrate 21 is a plate material which is a substantially flat plate including a thick steel plate or the like and is connected and supported to the lower traveling body 3 via the swivel bearing 11 with the plate surfaces facing the up-down direction. The support bracket 22 is provided in the front portion of the swivel substrate 21. A pair of vertical ribs 23, each of which is a member that reinforces the swivel substrate 21, are provided upright on the left and right of the upper surface portion of the swivel substrate 21, spaced apart from each other in the left-right direction, and also extend from the rear portion of the support bracket 22 to the front portion of the partition plate 24. The partition plate 24, which is a member that separates the lower front surface of the rear room R of the swivel base 2, is provided upright in front of the support frame 25 and extends toward the left and right sides of the swivel substrate 21. Although not illustrated, the swing bracket 15 is pivotally mounted to the support bracket 22 so as to be rotatable about a vertical axis (an axis extending in the up-down direction).

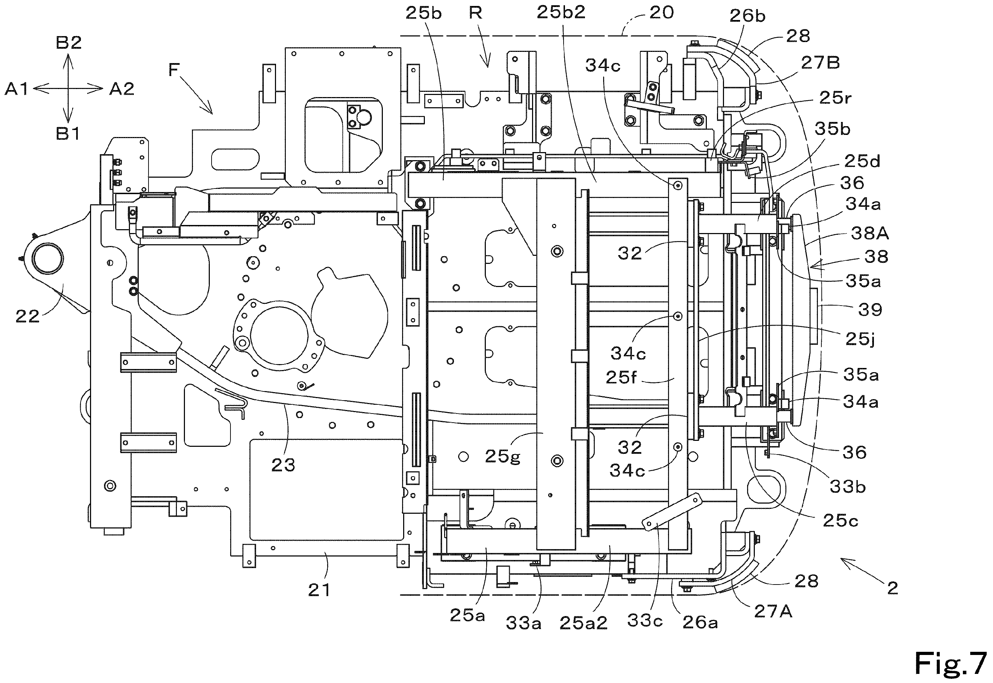

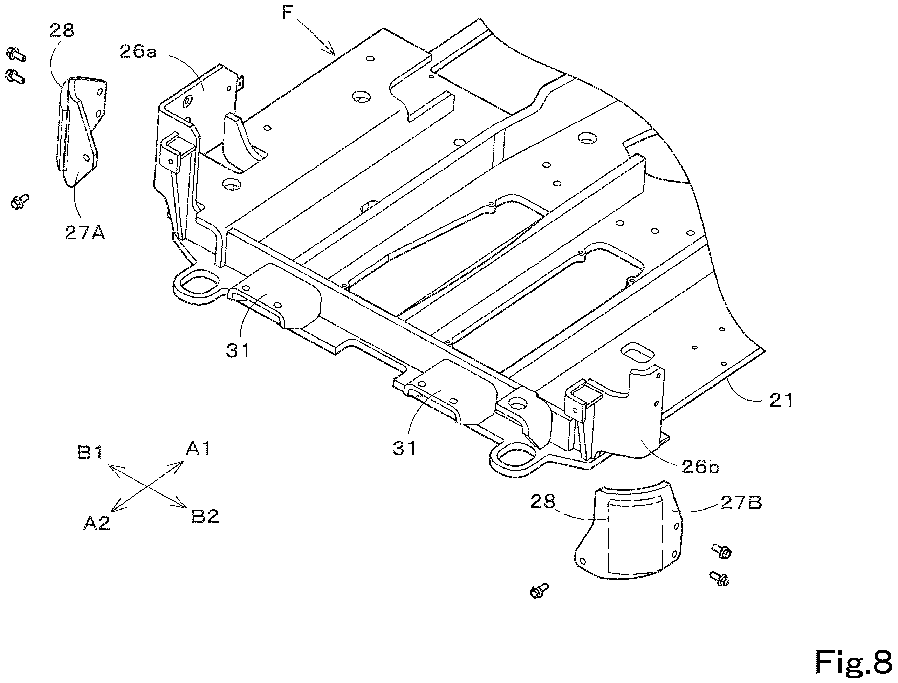

At the left and right rear corners of the swivel substrate 21, upright portions (a left side upright portion 26a and a right side upright portion 26b) are provided upright. In addition, the upright portions are provided with side portion reinforcement members (a left side portion reinforcement member 27A and a right side portion reinforcement member 27B) as reinforcement members for preventing or reducing deformation of the exterior cover 20 (a left rear portion bumper 20F and a right rear portion bumper 20H) due to an external force. As illustrated in FIGS. 7 and 8, the left side upright portion 26a is in a substantially L-shape when viewed from above so as to surround the left rear of the components and the like provided in the left rear portion of the swivel base 2. The right side upright portion 26b is in a substantially J-shape when viewed from above so as to surround the right rear of the components and the like provided in the right rear portion of the swivel substrate 21.

The left side portion reinforcement member 27A is a plate material obtained by bending a thick steel plate or the like into a substantially arc shape and is fixed with fixing screws to the left rear portion of the left side upright portion 26a with the outer surface (arc outer circumferential surface) facing the inner surface (surface facing the interior of the machine body) of the exterior cover 20. In addition, the left side portion reinforcement member 27A extends to a position above the upper end of the left side upright portion 26a. In this manner, the left side portion reinforcement member 27A is provided upright inside the exterior cover 20 (inward of the exterior cover 20 with respect to the machine body) at the left rear portion of the swivel base 2 and receives the impact load on the swivel base 2 from the left rear (one side of the machine body width direction) to disperse it to the swivel substrate 21. The right side portion reinforcement member 27B is a plate material obtained by bending a thick steel plate or the like into a substantially arc shape and is fixed with fixing screws to the right rear portion of the right side upright portion 26b with the outer surface (arc outer circumferential surface) facing the inner surface of the exterior cover 20. In addition, the right side portion reinforcement member 27B extends to a position above the upper end of the right side upright portion 26b. In this manner, the right side portion reinforcement member 27B is provided upright inside the exterior cover 20 (inward of the exterior cover with respect to the machine body) at the right rear portion of the swivel base 2 and receives the impact load on the swivel base 2 from the right rear (the other side of the machine body width direction) to disperse it to the swivel substrate 21. Note that the fixing means of the left side portion reinforcement member 27A to the left side upright portion 26a and the fixing means of the right side portion reinforcement member 27B to the right side upright portion 26b are not limited to fixing screws, and the fixing may be implemented by other joining members such as rivets or by welding.

A buffer member 28 is provided in each of the gap between the outer surface of the left side portion reinforcement member 27A and the inner surface of the exterior cover 20 and the gap between the outer surface of the right side portion reinforcement member 27B and the inner surface of the exterior cover 20. The buffer member 28 is a substantially rectangular plate material including an elastic material with high impact absorbing properties, such as natural rubber, urethane foam resin, or silicone resin, and is adhesively fixed to the outer surface of the left side portion reinforcement member 27A and the outer surface of the right side portion reinforcement member 27B. Note that the fixing means of the buffer member 28 to the side portion reinforcement members 27A and 27B is not limited to adhesive fixation, and the fixing may be implemented by other joining members such as fixing screws. In addition, the buffer member 28 may be fixed to the inner surface of the exterior cover 20.

As illustrated in FIGS. 4 to 7, the support frame 25 is a frame body that supports the exterior cover 20 and is provided upright at the rear portion of the swivel substrate 21 and rearward of the partition plate 24. More specifically, the support frame 25 includes a plurality of leg members (a first leg 25a, a second leg 25b, a third leg 25c, a fourth leg 25d, and a fifth leg 25e) provided upright in the upper surface portion of the swivel substrate 21 and a plurality of rod members (a first rod 25f and a second rod 25g) connected and fixed to these leg members.

The first leg 25a is a substantially L-shaped frame material that extends upward from the upper surface portion of the swivel substrate 21 on the left front of the rear room R and further extends rearward from the middle portion. The first leg 25a includes a first support portion 25a1 extending upward from the upper surface portion of the swivel substrate 21 and a first extension portion 25a2 extending rearward from the upper end of the first support portion 25a1. The fifth leg 25e extends downward from the lower portion of the first extension portion 25a2 and is connected to the upper surface portion of the swivel substrate 21. That is, the first leg 25a and the fifth leg 25e are connected to each other in a substantially U-shape when viewed from the side and define a left frame portion of the support frame 25. In addition, a first horizontal beam 25h is connected between the first leg 25a and the fifth leg 25e. The first horizontal beam 25h is a substantially flat-plate-like frame material that is long in one direction and extends in the front-rear direction from the vertical middle portion of the first support portion 25a1 to the vertical middle portion of the fifth leg 25e with the plate surfaces facing the left-right direction.

The second leg 25b is a substantially L-shaped frame material that extends upward from the upper surface portion of the swivel substrate 21 on the right front of the rear room R and further extends rearward from the middle portion. The second leg 25b includes a second support portion 25b1 extending upward from the upper surface portion of the swivel substrate 21 and a second extension portion 25b2 extending rearward from the upper end of the second support portion 25b 1.

The first leg 25a and the second leg 25b are provided upright at the rear portion of the swivel base 2 at a predetermined interval in the left-right direction. In addition, the first leg 25a and the second leg 25b are connected to each other at the above interval by the first rod 25f and the second rod 25g. Note that both the first rod 25f and the second rod 25g are substantially flat-plate-like frame materials that are long in one direction and extend in the left-right direction from the upper surface portion of the first extension portion 25a2 of the first leg 25a to the upper surface portion of the second extension portion 25b2 of the second leg 25b with the plate surfaces facing the up-down direction. In addition, the first rod 25f and the second rod 25g are arranged side by side at a predetermined interval in the front-rear direction.

The third leg 25c is a substantially L-shaped frame material that extends upward from the upper surface portion of the swivel substrate 21 on the left rear of the rear room R and further extends forward from the middle portion. That is, the third leg 25c includes a third support portion 25c1 extending upward from the upper surface portion of the swivel substrate 21 and a third extension portion 25c2 extending forward from the upper end of the third support portion 25c1.

The fourth leg 25d is a substantially L-shaped frame material that extends upward from the upper surface portion of the swivel substrate 21 on the right rear of the rear room R and further extends forward from the middle portion. That is, the fourth leg 25d includes a fourth support portion 25d1 extending upward from the upper surface portion of the swivel substrate 21 and a fourth extension portion 25d2 extending forward from the upper end of the fourth support portion 25d1.

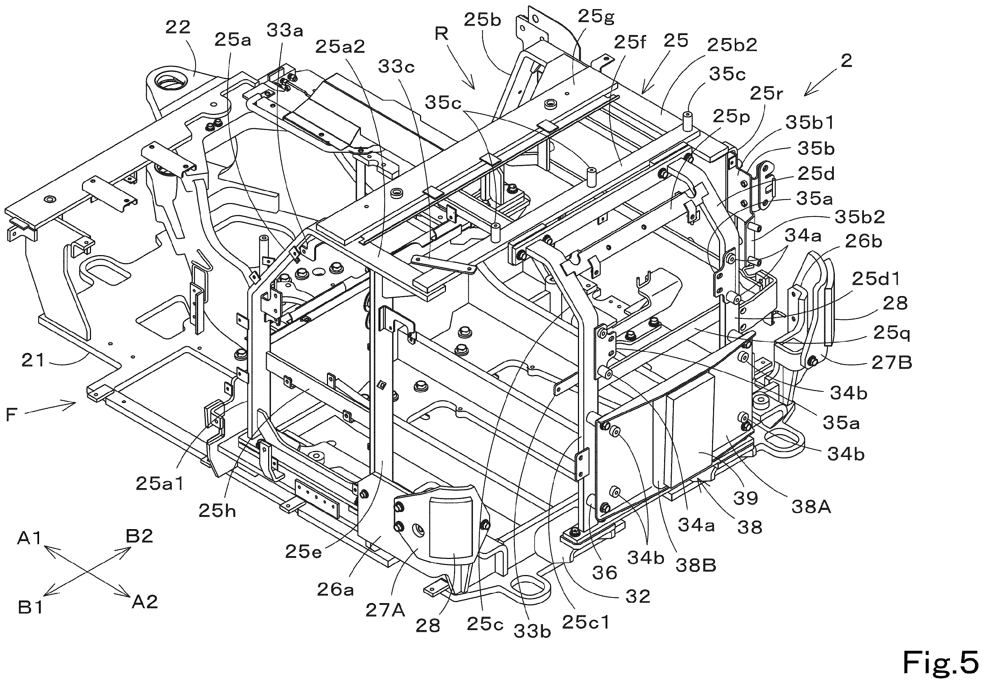

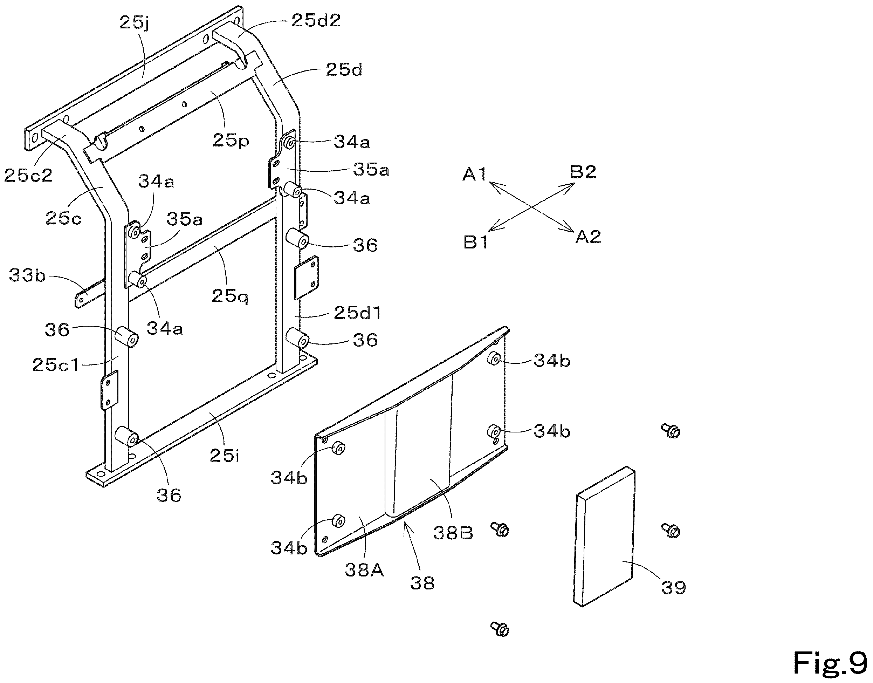

The third leg 25c and the fourth leg 25d are provided upright at the rear portion of the swivel base 2 at a predetermined interval in the left-right direction. Note that the distance between the third leg 25c and the fourth leg 25d is set to be smaller than the distance between the first leg 25a and the second leg 25b. In addition, the third leg 25c and the fourth leg 25d are connected and fixed to a first connecting plate 25i and a second connecting plate 25j at the above interval. More specifically, as illustrated in FIGS. 5 and 9, the lower end portion of the third support portion 25c 1 of the third leg 25c and the lower end portion of the fourth support portion 25d1 of the fourth leg 25d are connected to the first connecting plate 25i at an interval in the left-right direction. On the other hand, the front end portion of the third extension portion 25c2 of the third leg 25c and the front end portion of the fourth extension portion 25d2 of the fourth leg 25d are connected to the second connecting plate 25j at an interval in the left-right direction. In this manner, the third leg 25c and the fourth leg 25d are connected to each other by the first connecting plate 25i and the second connecting plate 25j to define a rear frame portion of the support frame 25. The first connecting plate 25i is a substantially flat-plate-like frame material that is long in one direction and is fixed with fixing screws to frame support portions 31 provided at the rear portion of the swivel substrate 21. The second connecting plate 25j is a substantially flat-plate-like frame material that is long in one direction and is fixed with fixing screws to frame connecting portions 32 provided at the rear portion of the first rod 25f.

In addition, a second horizontal beam 25p and a third horizontal beam 25q are connected between the third leg 25c and the fourth leg 25d. The second horizontal beam 25p and the third horizontal beam 25q are connected to the third leg 25c and the fourth leg 25d at a predetermined interval in the up-down direction. The second horizontal beam 25p extends in the left-right direction from a position near the third extension portion 25c2 of the third leg 25c to a position near the fourth extension portion 25d2 of the fourth leg 25d. The third horizontal beam 25q extends in the left-right direction from the vertical middle portion of the third leg 25c to the vertical middle portion of the fourth leg 25d.

In addition, as illustrated in FIGS. 5 to 7, the support frame 25 is provided at various locations with a plurality of cover fixing flanges (a first cover fixing flange 33a, a second cover fixing flange 33b, and a third cover fixing flange 33c), a plurality of cover fixing bosses (first cover fixing bosses 34a, second cover fixing bosses 34b, and third cover fixing bosses 34c), a plurality of clamp brackets (first clamp brackets 35a and a second clamp bracket 35b) as clamp attachment portions, a plurality of reinforcement member fixing bosses 36, a plurality of connecting flanges 37a, and a plurality of connecting brackets (a first connecting bracket 37b and a second connecting bracket 37c).

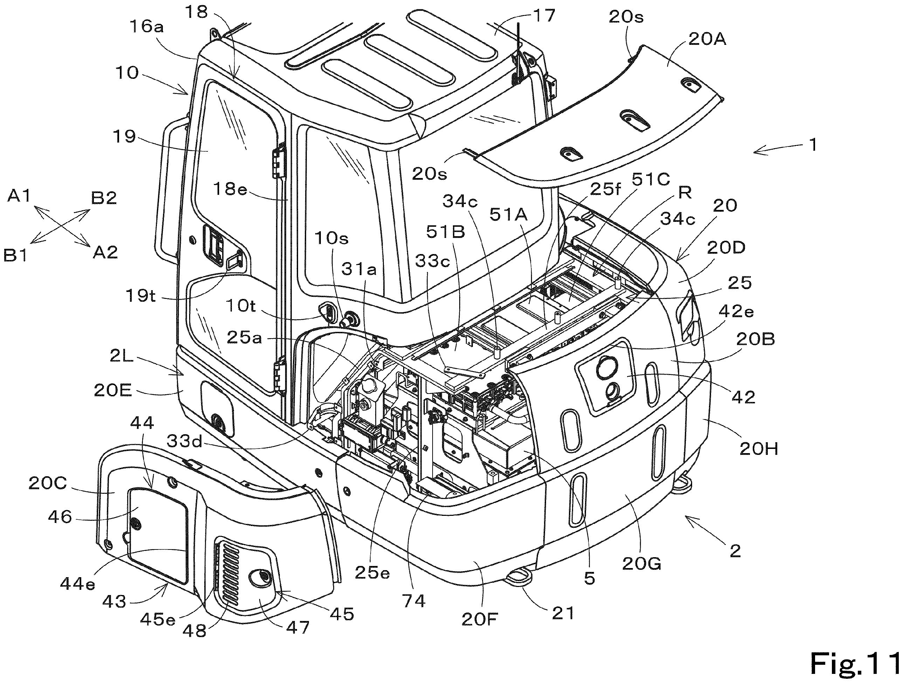

The first cover fixing flange 33a is provided in the left side portion of the first extension portion 25a2 of the first leg 25a with its screw receiving surface facing leftward. The second cover fixing flange 33b is provided in the left side portion of the third support portion 25c1 of the third leg 25c with its screw receiving surface facing rearward. The third cover fixing flange 33c is a substantially flat-plate-like frame material that is long in one direction and is provided at a position near the left of the upper surface portion of the first rod 25f with the plate surfaces facing the up-down direction. As illustrated in FIG. 11, the protection mechanism 10 is also provided in its left rear portion with a fourth cover fixing flange 33d as a cover fixing flange. The first cover fixing flange 33a, the second cover fixing flange 33b, the third cover fixing flange 33c, and the fourth cover fixing flange 33d serve as screw receiving portions for fixing screws that fix a left hood 20C described later.

As illustrated in FIGS. 5 to 7, the first cover fixing bosses 34a are provided upright in each of the rear surface portion of the first clamp bracket 35a provided at the rear portion of the third leg 25c and the rear surface portion of the first clamp bracket 35a provided at the rear portion of the fourth leg 25d and serve as screw receiving portions for fixing screws that fix a rear hood 20B described later. The second cover fixing bosses 34b are provided upright at the rear portions (a central portion reinforcement member 38) of the third leg 25c and the fourth leg 25d and serve as screw receiving portions for fixing screws that fix a central rear portion bumper 20G described later. The third cover fixing bosses 34c are provided upright in the upper surface portion of the first rod 25f and serve as screw receiving portions for fixing screws that fix an upper hood 20A described later. In the present embodiment, three third cover fixing bosses 34c are provided upright in the upper surface portion of the first rod 25f at intervals in the left-right direction.

The first clamp brackets 35a are substantially flat-plate-like pieces and are connected and fixed to the rear portion of the third leg 25c and the rear portion of the fourth leg 25d with the plate surfaces facing the front-rear direction. Note that two first cover fixing bosses 34a are provided one above the other in the rear surface portion of each of the first clamp brackets 35a. The second clamp bracket 35b is a plate piece having a support plate portion 35b1 and a rear plate portion 35b2 and is connected and fixed to a right frame portion 25r of the support frame 25 with the plate surfaces of the support plate portion 35b 1 facing the left-right direction and the plate surfaces of the rear plate portion 35b2 facing the front-rear direction.

Two reinforcement member fixing bosses 36 are provided one above the other in each of the rear portion of the third support portion 25c1 of the third leg 25c and the rear portion of the fourth support portion 25d1 of the fourth leg 25d. The central portion reinforcement member 38 is fixed with screws to the reinforcement member fixing bosses 36 as a reinforcement member that prevents or reduces deformation of the exterior cover 20 (the central rear portion bumper 20G) due to an external force. That is, the central portion reinforcement member 38 is provided at the rear portion of the support frame 25.

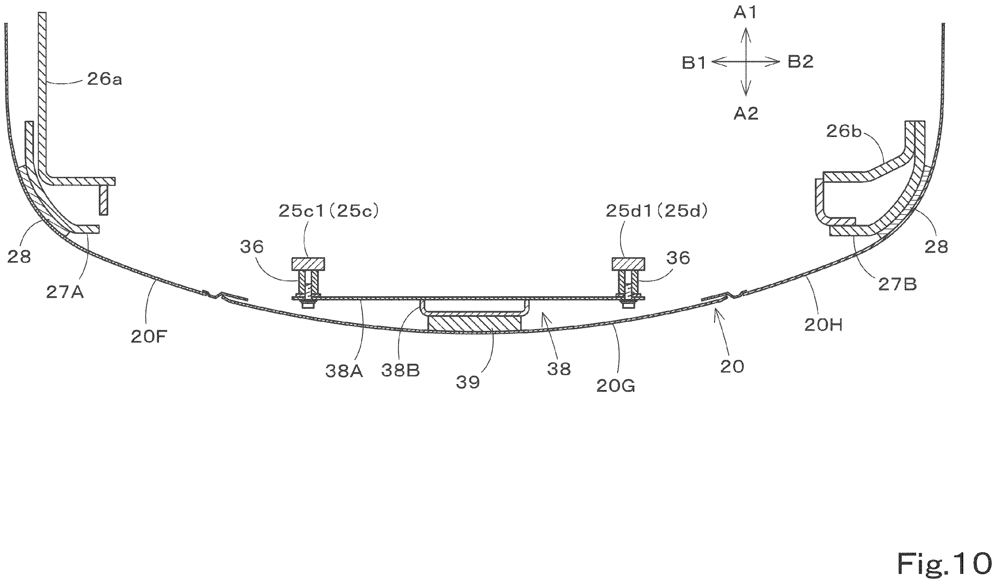

As illustrated in FIGS. 9 and 10, the central portion reinforcement member 38 has a substrate portion 38A and a reinforcing plate portion 38B. The substrate portion 38A is a plate material obtained by bending the upper and lower edge portions of a thick steel plate or the like at approximately right angles and is fixed with fixing screws to the reinforcement member fixing bosses 36 with a surface (rear surface portion) on the bent edge portion side facing the inner surface of the exterior cover 20. Note that two second cover fixing bosses 34b are provided one above the other at each of left and right positions of the rear surface portion of the substrate portion 38A with the reinforcing plate portion 38B interposed therebetween. The reinforcing plate portion 38B is a plate material obtained by bending the left and right edge portions of a thick steel plate or the like at approximately right angles and is welded and fixed to the center portion between the left and right of the rear surface portion of the substrate portion 38A with a surface (front surface portion) on the bent edge portion side facing forward. In this manner, the central portion reinforcement member 38 has a front-rear double plate structure in which the reinforcing plate portion 38B overlaps with the rear surface portion of the substrate portion 38A with a predetermined space therebetween, and the reinforcing plate portion 38B and the substrate portion 38A absorb the impact load on the swivel base 2 from behind to disperse it to the support frame 25. In the present embodiment, the reinforcing plate portion 38B is fixed to the substrate portion 38A by welding. However, the fixing means of the reinforcing plate portion 38B to the substrate portion 38A is not limited to welding, and the fixing may be implemented by joining members such as rivets or fixing screws. Alternatively, the reinforcing plate portion 38B may be integral with the substrate portion 38A and obtained from the same plate material as the substrate portion 38A.

A buffer member 39 is provided between the rear surface of the central portion reinforcement member 38 and the inner surface of the exterior cover 20. The buffer member 39 is a substantially rectangular plate material including an elastic material with high impact absorbing properties, such as natural rubber, urethane foam resin, or silicone resin, and is adhesively fixed to the rear surface of the reinforcing plate portion 38B. Note that the fixing means of the buffer member 39 to the central portion reinforcement member 38 is not limited to adhesive fixation, and the fixing may be implemented by other joining members such as fixing screws. In addition, the buffer member 39 may be fixed to the inner surface of the exterior cover 20.

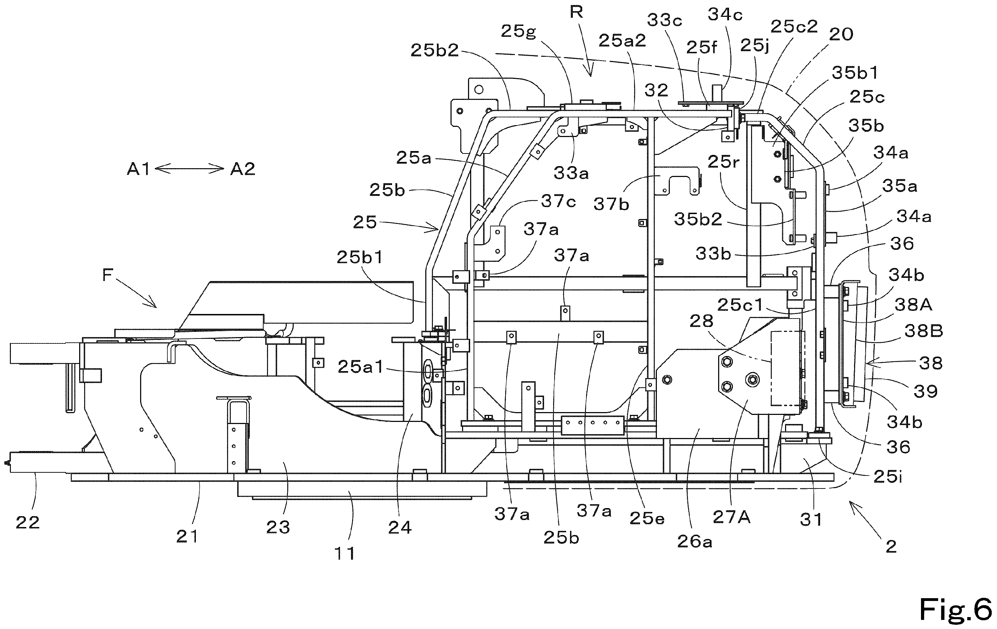

As illustrated in FIGS. 5 and 6, the connecting flanges 37a are substantially L-shaped plate pieces and are provided at the rear portion of the first support portion 25a1 of the first leg 25a and in the upper portion and the left side portion of the first horizontal beam 25h with the screw receiving surface facing leftward. These connecting flanges 37a serve as screw receiving portions for fixing screws that fix an electrical bracket 80 described later. The first connecting bracket 37b is a substantially L-shaped plate piece and is provided at the rear portion of the fifth leg 25e with its screw receiving surface facing leftward. The first connecting bracket 37b serves as a screw receiving portion for fixing screws that fix a battery isolator 75 described later. The second connecting bracket 37c is a substantially L-shaped plate piece and is provided at the rear portion of the first support portion 25a1 of the first leg 25a with its screw receiving surface facing leftward. The second connecting bracket 37c serves as a screw receiving portion for fixing screws that fix a gas-liquid separation tank 76 described later.

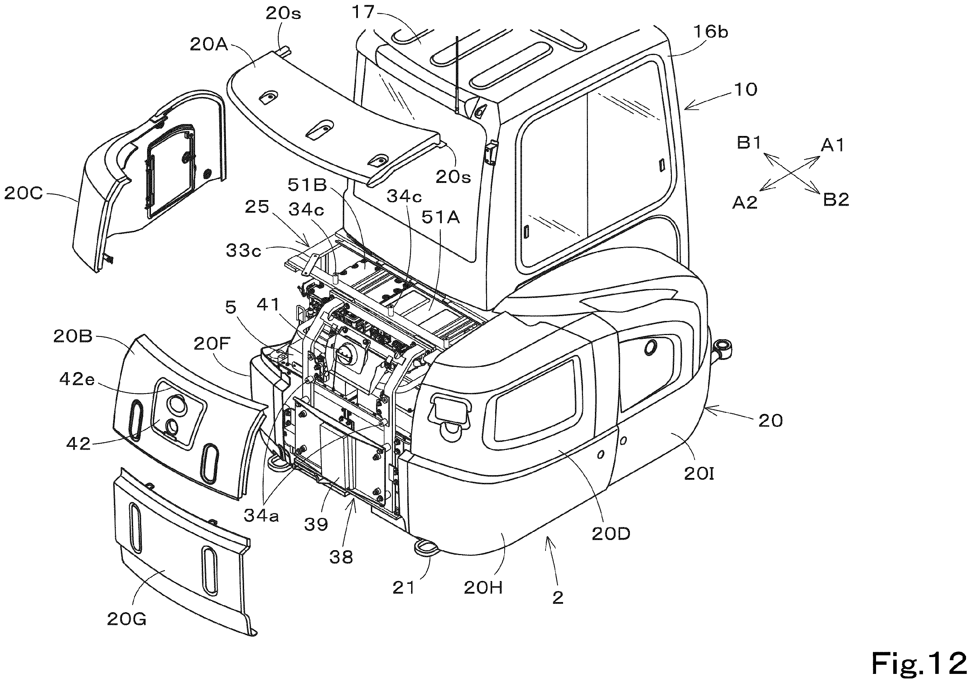

As illustrated in FIGS. 11 and 12, the exterior cover 20 includes the upper hood (upper portion cover) 20A, the rear hood (rear portion cover) 20B, the left hood (first side portion cover) 20C, a right hood 20D, a left bumper 20E, the left rear portion bumper (rear portion exterior cover) 20F, the central rear portion bumper (rear portion exterior cover) 20G, the right rear portion bumper (rear portion exterior cover) 20H, and a right bumper 201.

The upper hood 20A is a cover member that defines the upper wall of the rear room R and is fixed to the upper portion of the support frame 25 in a removable manner. More specifically, the upper hood 20A has hooking pieces 20s provided in the front portion, and with the hooking pieces 20s hooked onto the rear portion lower edge of the protection mechanism 10, the upper hood 20A is fixed with fixing screws to the third cover fixing bosses 34c of the support frame 25 from above.

The rear hood 20B is a cover member that substantially defines the upper half of the rear wall of the rear room R and is fixed to the rear portion of the support frame 25 in a removable manner. More specifically, the rear hood 20B is fixed with fixing screws to the first cover fixing bosses 34a of the support frame 25 from behind. A charging lid 42 covering, from behind, a charging port 41 provided at the rear portion of the support frame 25 is provided in the center portion between the left and right of the rear hood 20B. The charging lid 42 is pivotally connected to an outer upper edge portion 42e of the outer circumference of the charging lid 42 in the rear hood 20B by a hinge or the like and is configured to open upward from the closed position in which the charging port 41 is covered. The charging port 41 is a socket for connecting an external charging cable and is supported and fixed at a position facing forward of the charging lid 42 on the second horizontal beam 25p of the support frame 25, as illustrated in FIG. 12. Therefore, the charging port 41 is exposed to the outside of the exterior cover 20 by opening the charging lid 42, and the charging cable can be connected thereto. Note that, as long as at least the portion of the rear hood 20B facing the charging port 41 can be opened and closed, the cover structure is not limited to the configuration of the charging lid 42 described above. For example, the cover structure may be configured to be openable and closable by sliding vertically or horizontally.

The left hood 20C is a cover member that substantially defines the upper half of the left side wall of the rear room R and is fixed to the left side portion of the support frame 25 in a removable manner. More specifically, the left hood 20C is in a curved shape so as to cover the area from the left side portion (first side portion) 2L of the swivel base 2 to the left rear corner, is fixed with fixing screws to the third cover fixing flange 33c of the support frame 25 from above and also fixed with fixing screws to the second cover fixing flange 33b from behind, and is further fixed with fixing screws to the first cover fixing flange 33a of the support frame 25 and the fourth cover fixing flange 33d provided in the left rear portion of the protection mechanism 10 from the left side. Note that the third cover fixing flange (upper fixing portion) 33c is provided at a position covered with the upper hood 20A from above, and the second cover fixing flange (rear fixing portion) 33b is provided at a position covered with the rear hood 20B from behind. Therefore, in order to remove the left hood 20C from the support frame 25, first, the upper hood 20A and the rear hood 20B are required to be removed from the support frame 25. That is, after the upper hood 20A and the rear hood 20B are removed, the left hood 20C can be removed from the support frame 25.

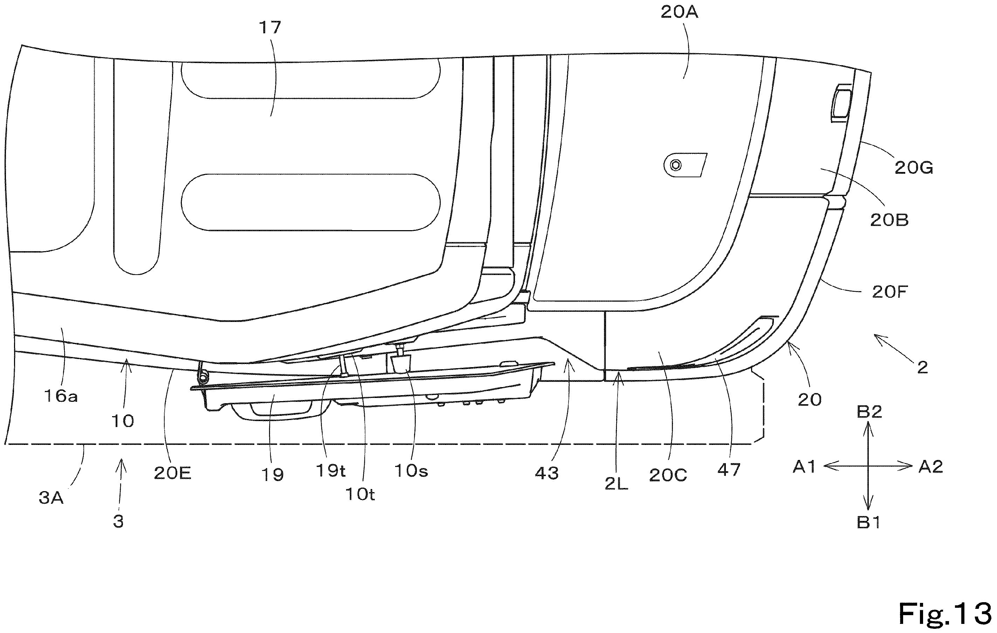

As illustrated in FIGS. 2, 11, and 13, a recessed surface portion 43 is provided in the left side surface portion of the left hood 20C to avoid contact with the entrance door 19 that is opened to the fully open position. The recessed surface portion 43 is recessed in a substantially V-shape when viewed from above toward the center (right) of the swivel base 2 so as to fit along the left side surface portion of the protection mechanism 10, thereby avoiding contact with the left hood 20C when the entrance door 19 is opened to the fully open position. Note that the protection mechanism 10 is provided on its left side surface portion with a stopper 10s and a latch portion 10t. On the other hand, the entrance door 19 is provided in the outer surface portion (left side surface portion) with a hook 19t, and when the entrance door 19 is opened to the fully open position, the outer surface portion abuts against the stopper 10s and the hook 19t engages with the latch portion 10t, thereby holding the entrance door 19 on the left side of the recessed surface portion 43. At this time, the entrance door 19 is held inside (toward the center of the machine body) the left side end portion of the lower traveling body 3 when viewed from above. That is, the entrance door 19 is held at a position where the entrance door 19 does not protrude to the left beyond the lower traveling body 3 when viewed from above.

As illustrated in FIGS. 1 and 11, the left hood 20C is provided with a first inspection window 44, a second inspection window 45, a first inspection door 46, and a second inspection door 47. The first inspection window 44 and the second inspection window 45 allow inspection of components and the like provided in the rear room R. The first inspection door 46 can open and close the first inspection window 44. The second inspection door 47 can open and close the second inspection window 45. The first inspection window 44 and the second inspection window 45 are openings communicating between the outside of the exterior cover 20 and the rear room R and are provided side by side at the front and rear of the left hood 20C, as illustrated in FIGS. 1 and 11. The second inspection window 45 is provided rearward of the first inspection window 44.

The first inspection window 44 is opened in the recessed surface portion 43. Therefore, when the entrance door 19 is opened to the fully open position, the first inspection window 44 is entirely covered with the entrance door 19. The first inspection door 46 is pivotally connected to a side frame portion 44e behind the first inspection window 44 by hinges or the like and is configured to open rearward from the closed position in which the first inspection window 44 is closed. That is, the first inspection door 46 is configured to open toward the second inspection window 45.

The second inspection window 45 is opened rearward of the recessed surface portion 43 in the left hood 20C. The second inspection door 47 is pivotally connected to a side frame portion 45e in front of the second inspection window 45 by hinges or the like and is configured to open forward from the closed position in which the second inspection window 45 is closed. That is, the second inspection door 47 is configured to open toward the first inspection window 44. In addition, on the second inspection window 45, a plurality of ventilation openings 48 communicating between the outside of the exterior cover 20 and the rear room R are opened. More specifically, the plurality of horizontally elongated slit-like ventilation openings 48 are opened one above another at a position near the front in the center portion between the left and right of the second inspection door 47 covering the second inspection window 45.

As illustrated in FIG. 12, the right hood 20D is a cover member that substantially defines the upper half of the right side wall of the rear room R and is fixed to the right side portion of the support frame 25 so as not to be easily removed, although the specific fixing structure is not illustrated.

As illustrated in FIG. 11, the left bumper 20E is a cover member provided on the lower left side surface of the protection mechanism 10 (the left of the swivel substrate 21) and is fixed with bolts to the swivel substrate 21. The left rear portion bumper 20F is a cover member that substantially defines the lower half of the left side wall of the rear room R and is fixed with bolts to the swivel substrate 21 to cover the side, facing rearward of the machine body, of the space (the rear room R) in which the battery unit 5 is provided. As illustrated in FIG. 12, the right rear portion bumper 20H is a cover member that substantially defines the lower half of the right side wall of the rear room R and is fixed with bolts to the swivel substrate 21 to cover the side, facing rearward of the machine body, of the space (the rear room R) in which the battery unit 5 is provided. The right bumper 201 is a cover member provided on the lower right side surface of the protection mechanism 10 (the right of the swivel substrate 21) and is fixed with bolts to the swivel substrate 21. As illustrated in FIG. 10, the buffer member 28 provided on the left side portion reinforcement member 27A is provided in a state of surface contact with the inner surface of the left rear portion bumper 20F. The buffer member 28 provided on the right side portion reinforcement member 27B is provided in a state of surface contact with the inner surface of the right rear portion bumper 20H. That is, the buffer member 28 is provided in each of the gap between the outer surface of the left side portion reinforcement member 27A and the inner surface of the left rear portion bumper 20F and the gap between the outer surface of the right side portion reinforcement member 27B and the inner surface of the right rear portion bumper 20H.

As illustrated in FIG. 12, the central rear portion bumper 20G is a cover member that substantially defines the lower half of the rear wall of the rear room R and is fixed with fixing screws to the second cover fixing bosses 34b provided on the substrate portion 38A of the central portion reinforcement member 38 from behind to cover the side, facing rearward of the machine body, of the space (the rear room R) in which the battery unit 5 is provided. As illustrated in FIG. 10, the buffer member 39 provided on the central portion reinforcement member 38 is provided in a state of surface contact with the inner surface of the central rear portion bumper 20G. That is, the buffer member 39 is provided in the gap between the rear surface of the reinforcing plate portion 38B of the central portion reinforcement member 38 and the inner surface of the central rear portion bumper 20G.

In the present embodiment, the upper hood 20A, the rear hood 20B, the left hood 20C, the right hood 20D, the left bumper 20E, the left rear portion bumper 20F, the central rear portion bumper 20G, the right rear portion bumper 20H, and the right bumper 201 defining the exterior cover 20 all include steel plates (sheet metal) with high impact absorbing properties. Note that the exterior cover 20 may alternatively include a resin material with high impact absorbing properties.

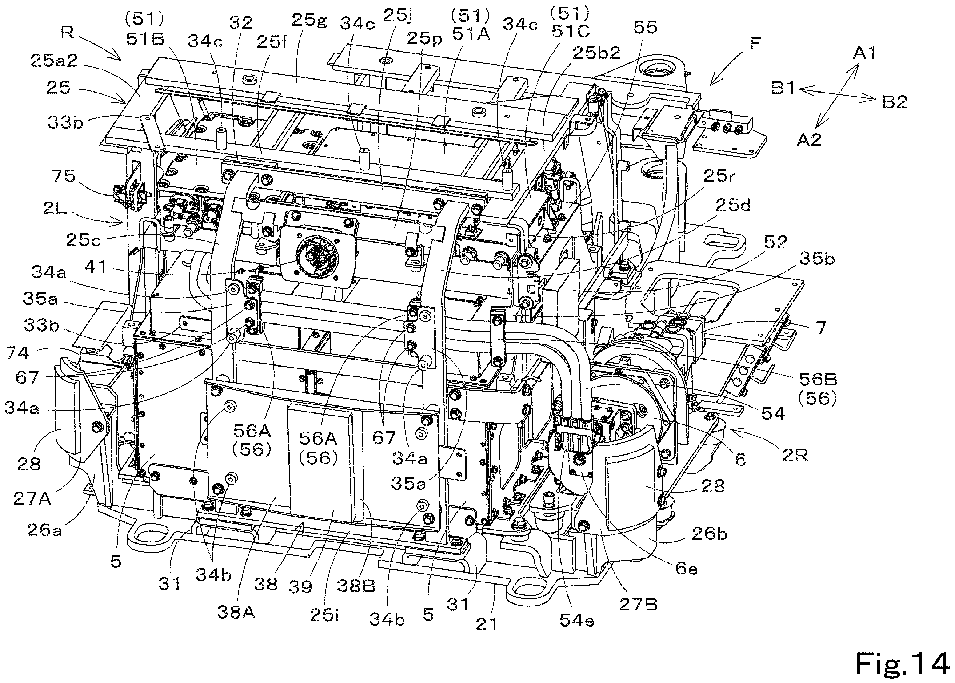

As illustrated in FIG. 14, in the rear room R provided at the rear portion of the swivel base 2, in addition to the battery unit 5, the electric motor 6, the hydraulic pump 7, electrical equipment 51, a radiator 52, and the like are provided. The battery unit 5 is provided in the upper surface portion of the swivel substrate 21. The electrical equipment 51 is provided above the battery unit 5. That is, the battery unit 5, which is relatively heavy, is provided below the electrical equipment 51, lowering the center of gravity of the swivel working machine 1. The electric motor 6 and the hydraulic pump 7 are provided side by side in the front-rear direction on the right of the battery unit 5 in the rear room R. The battery unit 5 and the electrical equipment 51 are provided in the inner space surrounded by the support frame 25. The electric motor 6 and the hydraulic pump 7 are provided on the outer right of the support frame 25. That is, as illustrated in FIGS. 2 and 3, the electric motor 6 and the hydraulic pump 7 are provided at a right side portion (second side portion) 2R, which is one of opposite side portions in the machine body width direction, of the rear portion of the swivel base 2. Note that the right side portion reinforcement member 27B is provided rearward of the electric motor 6 and the hydraulic pump 7.

The battery unit 5 is a charge/discharge type battery that stores electric power supplied from an external power source via the charging port 41 and outputs the stored electric power to the electric motor 6 and the like and is, for example, a secondary battery such as a lithium ion battery or a lead storage battery. In the present embodiment, two battery units 5 are provided in the upper surface portion of the swivel substrate 21, side by side on the left and right. These battery units 5 are connected in parallel to each other. As illustrated in FIGS. 1 and 2, the rear portion of the battery unit 5 is positioned rearward of the rear portion of the lower traveling body 3 and off-center to the left of the center line L of the swivel base 2, so that the center of gravity of the swivel working machine 1 is shifted to the rear left. That is, the battery unit 5 serves as a weight for preventing or reducing the tilting of the swivel working machine 1 toward the front during work. Note that the number of mounted battery units 5 is not limited to two, but may be three or more.

The electric motor 6 is a drive source that is driven by the electric power output from the battery unit 5 and is connected to the electrical equipment 51 via a high-power harness 54 extended into the rear room R. The electric motor 6 of the present embodiment is a three-phase AC synchronous motor of a permanent magnet embedded type and, although not illustrated, has a rotatable rotor (rotor) and a stator (stator) that generates a force to rotate the rotor. Note that the electric motor 6 may be a synchronous motor of another type or may be an AC motor or a DC motor. The hydraulic pump 7 is a pump device that is driven by the driving force transmitted from a drive shaft (not illustrated) of the electric motor 6 and delivers the hydraulic fluid and is connected to the front portion of the electric motor 6. That is, the hydraulic pump 7 is driven by the electric power output from the battery unit 5.

The electrical equipment 51 is a device that is directly or indirectly connected to the battery unit 5 and that transmits the electric power supplied from the battery unit 5 to other devices or that is operated by the electric power. As illustrated in FIG. 14, the electrical equipment 51 includes a junction box 51A, an inverter 51B, and a DC/DC converter 51C. The junction box 51A, the inverter 51B, and the DC/DC converter 51C are provided side by side in the left-right direction in the upper surface portion of a connecting stay 55 provided in the upper portion of the battery unit 5. The junction box 51A is provided in the upper surface portion of the connecting stay 55 substantially at the center in the left-right direction. The inverter 51B is provided in the upper surface portion of the connecting stay 55 on the left of the junction box 51A. The DC/DC converter 51C is provided in the upper surface portion of the connecting stay 55 on the right of the junction box 51A.

The junction box 51A is connected to other devices including the battery unit 5 and the inverter 51B and transmits the electric power supplied from the battery unit 5 to the other devices. The inverter 51B is provided in the electric power supply path from the battery unit 5 to the electric motor 6 and adjusts the electric power to be output to the electric motor 6. In the present embodiment, the inverter 51B is connected to the junction box 51A and the electric motor 6. The inverter 51B is a device that drives the electric motor 6 and converts DC power into three-phase AC power to supply it to the electric motor 6. The inverter 51B can freely change the current and voltage of the electric power to be supplied to the electric motor 6. The DC/DC converter 51C converts the voltage of the input DC power into a different voltage. In the present embodiment, the DC/DC converter 51C is a step-down converter that converts the voltage of the input DC power into a lower voltage. The DC/DC converter 51C supplies electric power to a sub-battery 74 described later.

The radiator 52 is a device that cools a refrigerant for cooling the battery unit 5, the electric motor 6, the electrical equipment 51, and the like. More specifically, the radiator 52 generates cooling air by rotationally driving a radiator fan (not illustrated) to remove heat from the refrigerant flowing inside the radiator 52. Part of the air introduced into the radiator 52 by the radiator fan is taken into the interior of the exterior cover 20 through the ventilation openings 48 of the second inspection door 47. The radiator 52 is supported and fixed to the right frame portion 25r provided in the lower portion of the second extension portion 25b2.

The harness 54 is a three-phase AC cable (high-power harness) including three electric wires and connects the electric motor 6 and the inverter 51B to each other. A connector 54e at a first end of the harness 54 is connected to a harness connection portion 6e at the rear portion of the electric motor 6. On the other hand, although not illustrated, a second end of the harness 54 is connected from below the connecting stay 55 to the lower portion of the inverter 51B. In addition, the harness 54 is supported and fixed to the support frame 25 by a plurality of clamps 56. Note that the right side upright portion 26b provided in the right rear portion of the swivel substrate 21 is provided upright on the right rear of the electric motor 6 and protects the harness connection portion 6e and the connector 54e from the right rear.

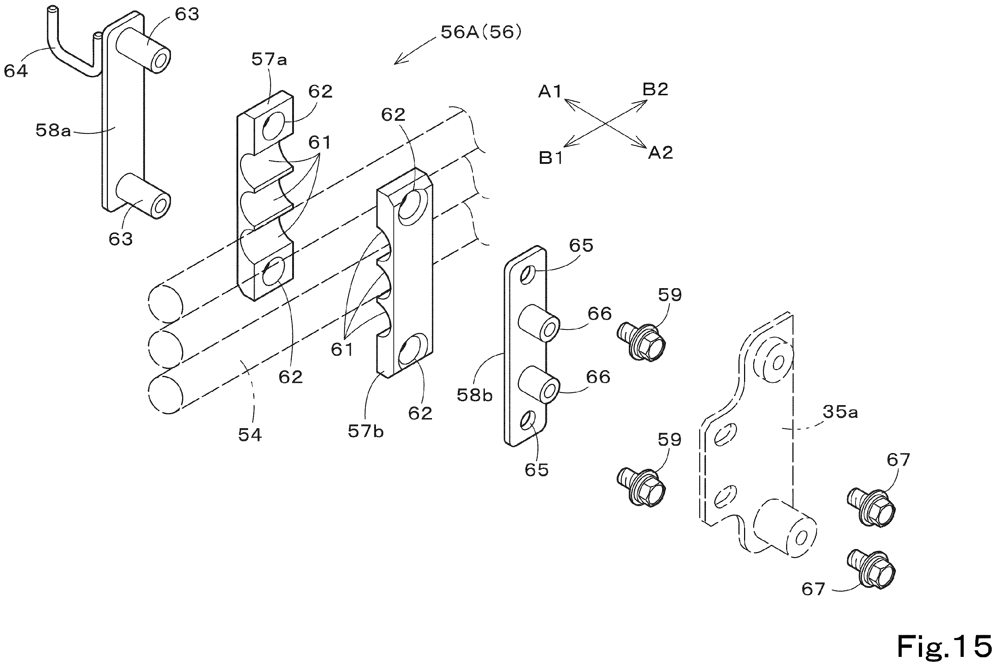

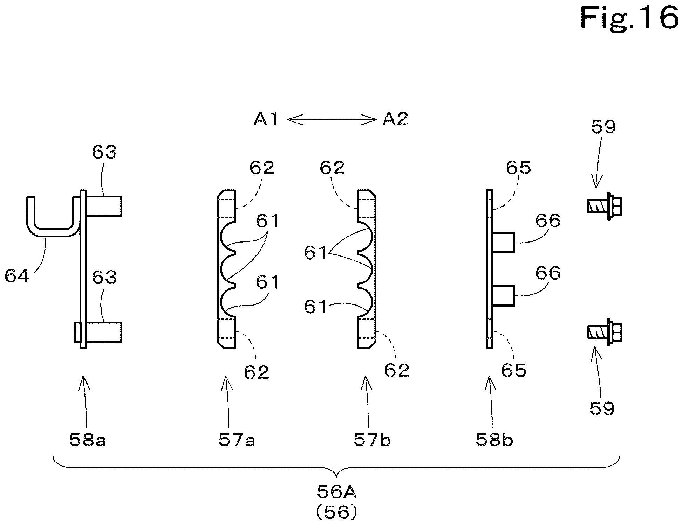

The clamps 56 include first clamps 56A fixed to the third leg 25c and the fourth leg 25d of the support frame 25 and a second clamp 56B fixed to the right frame portion 25r of the support frame 25. That is, the support frame 25 includes the rear frame portion (the third leg 25c and the fourth leg 25d) provided upright in the rear portion of the rear room R and the side frame portion (right frame portion) 25r provided upright in the side portion of the rear room R, the side portion being on a side where the electric motor 6 is provided, the first clamps 56A are fixed to the rear frame portion (the third leg 25c and the fourth leg 25d), and the second clamp 56B is fixed to the side frame portion (right frame portion) 25r. As illustrated in FIGS. 15 and 16, each of the first clamps 56A has a pair of first and second pressing members 57a and 57b that clamp the harness 54 from both the front and rear (radial direction), a pair of first and second fixing plates 58a and 58b that clamp both the first and second pressing members 57a and 57b from both the front and rear, and fixing screws 59 connecting and fixing the first and second fixing plates 58a and 58b to each other.

The first pressing member 57a is a thick-plate-like member that is long in the up-down direction and is provided forward of the harness 54. In the rear surface portion of the first pressing member 57a, at least one concave surface portion 61 having a substantially semicircular shape that continues from the left side portion to the right side portion is provided. Three concave surface portions 61 are provided one above another at equal intervals in the center portion of the rear surface portion of the first pressing member 57a in the up-down direction. The first pressing member 57a has boss insertion holes 62 provided at positions near the upper and lower end portions thereof, through which connecting bosses 63 of the first fixing plate 58a are inserted. The second pressing member 57b is a member having the same shape as that of the first pressing member 57a and is provided in the rear surface portion of the first pressing member 57a so as to overlap with the harness 54 from behind. Thus, the three electric wires of the harness 54 are clamped from the front and rear by the concave surface portions 61 of both the first pressing member 57a and the second pressing member 57b and are held in a vertically aligned state. In the present embodiment, both the first pressing member 57a and the second pressing member 57b include an elastic material with high insulating properties, such as natural rubber or synthetic rubber.

The first fixing plate 58a is a substantially rectangular flat-plate-like member that is long in the up-down direction and is provided in the front surface portion of the first pressing member 57a. The connecting bosses 63 for screwing and connecting the fixing screws 59 are provided upright in the rear surface portion of the first fixing plate 58a. The connecting bosses 63 are provided upright at positions near the upper and lower end portions of the first fixing plate 58a and are, when the first fixing plate 58a overlaps with the front surface portion of the first pressing member 57a, inserted into the boss insertion holes 62 of both the first pressing member 57a and the second pressing member 57b. In addition, a substantially U-shaped cable hook 64 on which cables other than the harness 54 can be hung is provided in the front surface portion of the first fixing plate 58a. The second fixing plate 58b is a substantially rectangular flat-plate-like member that is long in the up-down direction and is provided in the rear surface portion of the second pressing member 57b. In addition, screw insertion holes 65 for inserting the screw shafts of the fixing screws 59 are provided near the upper and lower end portions of the second fixing plate 58b, and the fixing screws 59 are screwed and connected through the screw insertion holes 65 to the connecting bosses 63 of the first fixing plate 58a, so that the first fixing plate 58a and the second fixing plate 58b are connected and fixed to each other. In addition, fixing bosses 66 for fixing the clamp 56 with screws to predetermined attachment positions are provided upright in the rear surface portion of the second fixing plate 58b.

Although omitted from the illustration, the second clamp 56B has a pair of pressing members identical to the first pressing member 57a and the second pressing member 57b (see FIG. 15) of the first clamp 56A, a fixing plate that clamps the pressing members from both the front and rear with the rear plate portion 35b2 of the second clamp bracket 35b, and fixing screws that connect and fix the fixing plate to the rear plate portion 35b2. More specifically, connecting bosses for screwing and connecting the fixing screws are provided upright in the rear surface portion of the rear plate portion 35b2 of the second clamp bracket 35b, similar to the first fixing plate 58a (see FIG. 15) of the first clamp 56A. On the other hand, similar to the second fixing plate 58b (see FIG. 15) of the first clamp 56A, screw insertion holes for inserting the screw shafts of the above fixing screws are provided in the above fixing plate, and the above fixing plate and the rear plate portion 35b2 of the second clamp bracket 35b are connected and fixed to each other by screwing and connecting the fixing screws through the screw insertion holes to the above connecting bosses.

As illustrated in FIG. 14, the first clamps 56A are fixed with fastening members (fixing screws) 67 to the front surface portions of the two first clamp brackets 35a of the support frame 25 from behind and clamp and fix the harness 54 forward of the third leg 25c and the fourth leg 25d in a direction extending in the left-right direction. Thus, the harness 54 is guided forward of the rear frame portion (the third leg 25c and the fourth leg 25d) of the support frame 25 in the rear room R and along the inner surface of the rear hood (rear portion cover) 20B of the swivel base 2. Also, although not illustrated, the second clamp 56B is fixed with fastening members (fixing screws) to the front surface portion of the rear plate portion 35b2 of the second clamp bracket 35b of the support frame 25 from the front and clamp and fix the harness 54 in the right frame portion 25r (above the harness connection portion 6e of the electric motor 6) in a direction extending in the left-right direction. This allows the harness 54 to be supported and fixed to the support frame 25 more stably.

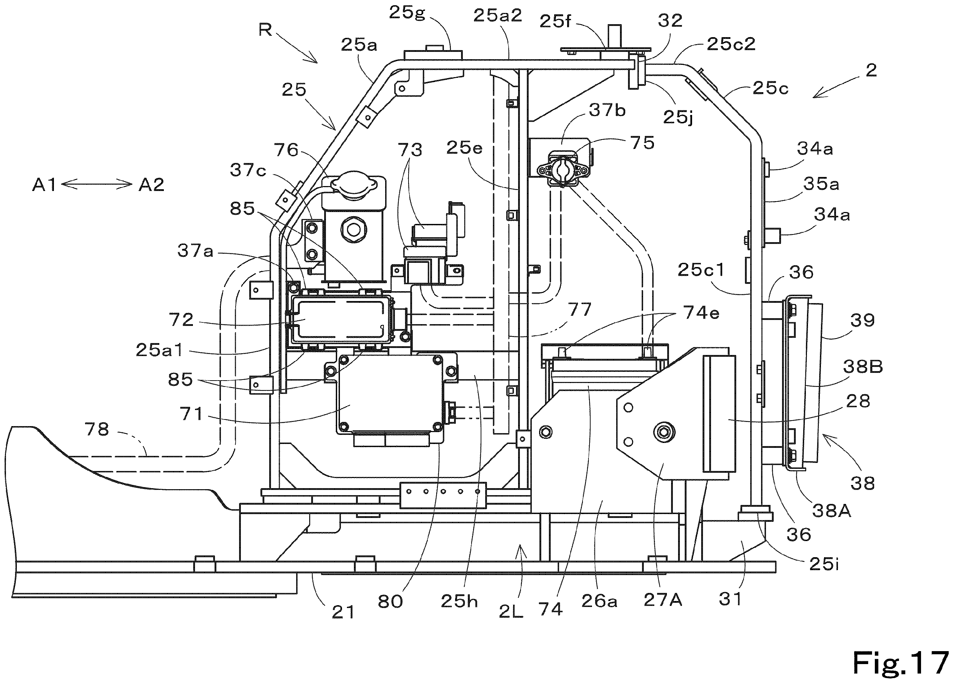

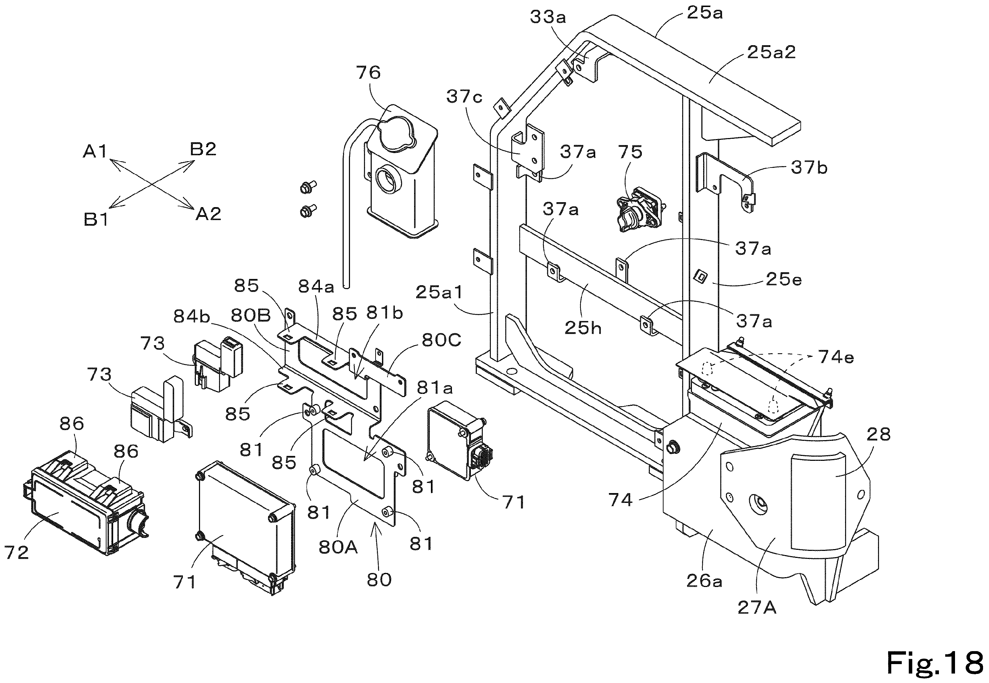

As illustrated in FIGS. 17 and 18, as electrical components, at least one controller 71, an electrical box 72, a relay box 73, the sub-battery 74, the battery isolator 75, and the like are provided in the rear room R. The gas-liquid separation tank 76 is also provided in the rear room R. The controller 71, the electrical box 72, the relay box 73, the sub-battery 74, the battery isolator 75, and the gas-liquid separation tank 76 are provided on the left of the battery unit 5 on the swivel base 2. That is, the controller 71, the electrical box 72, the relay box 73, the sub-battery 74, the battery isolator 75, and the gas-liquid separation tank 76 are provided at the left side portion (first side portion) 2L of the machine body width direction at the rear portion of the swivel base 2. Note that the left side portion reinforcement member 27A is provided rearward of the sub-battery 74.

The controller 71 includes an electronic control unit (ECU) including CPU, memory(memories), and/or the like and controls operations of units of the swivel working machine 1, such as the output operation of the battery unit 5, the operation of the electric motor 6, and the operation of the hydraulic pump 7. As illustrated in FIG. 17, the electrical box 72 is a relay fuse box that houses a plurality of relays and fuses. The relay box 73 houses relays. The sub-battery 74 is a power source that supplies electric power to the controller 71. The battery isolator 75 is a device that charges the sub-battery 74 with surplus electric power from the battery unit 5 during work. The gas-liquid separation tank 76 is a tank that stores a heat transfer medium for heating. The controller 71, the electrical box 72, the relay box 73, the sub-battery 74, and the battery isolator 75 are connected to devices via a low-power harness 77 extended into the rear room R. The gas-liquid separation tank 76 is connected to a circulation pump (not illustrated) via a hot water circulation path 78 extended forward (to the space below the operator's seat 8) from the rear room R.

As illustrated in FIG. 18, the controller 71, the electrical box 72, and the relay box 73 are attached to the left frame portion of the support frame 25 via the common electrical bracket 80. The electrical bracket 80 is a plate-like frame including a thick steel plate or the like and is fixed to the connecting flanges 37a provided in the left frame portion of the support frame 25 with the plate surfaces facing the left-right direction. The controller 71, the electrical box 72, the relay box 73, and the gas-liquid separation tank 76 are all fixed to the left side surface (the surface on the exterior cover 20 side) of the electrical bracket 80.

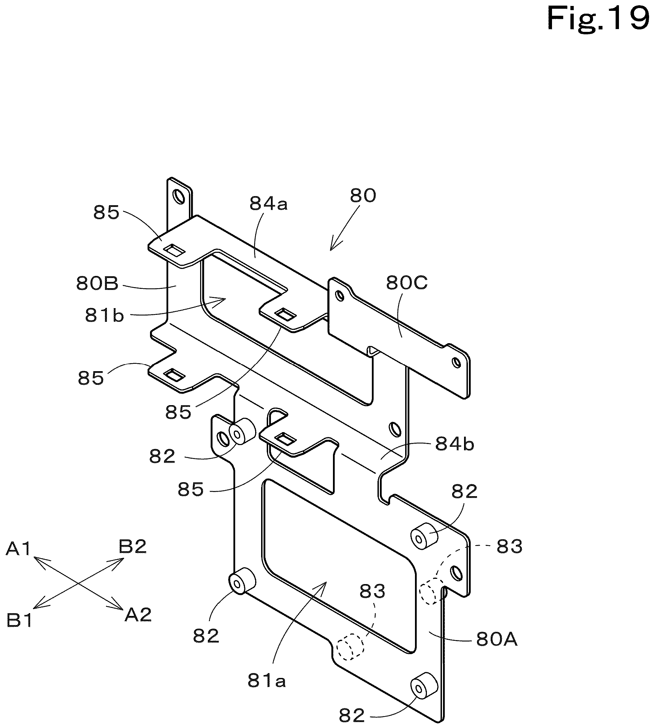

As illustrated in FIG. 19, the electrical bracket 80 has a first attachment portion 80A serving as the attachment portion for the controller 71, a second attachment portion 80B having a substantially rectangular shape when viewed from the side and serving as the attachment portion for the electrical box 72, and a third attachment portion 80C having a substantially rectangular shape when viewed from the side and serving as the attachment portion for the relay box 73. The first attachment portion 80A is in a substantially rectangular plate shape when viewed from the side. The first attachment portion 80A has a substantially rectangular opening 81a provided in the center. The first attachment portion 80A has a plurality of screw receiving bosses 82 provided on the left side surface (first side surface). In the present embodiment, four screw receiving bosses 82 are provided upright to be spaced apart from one another in the up-down and left-right directions and positioned outward from the opening 81a on the left side surface of the first attachment portion 80A, and the controller 71 is fixed with screws to these screw receiving bosses 82. Note that the first attachment portion 80A also has a plurality of screw receiving bosses 83 on the right side surface (second side surface), so that the controller 71 other than the controller 71 on the left side surface (first side surface) can be fixed with screws as illustrated in FIG. 18. That is, in the present embodiment, the first attachment portion 80A is provided with the screw receiving bosses 82 and 83 on both the left and right side surfaces as attachment portions to which the controllers 71 can be attached. In the present embodiment, two screw receiving bosses 83 are provided upright to be spaced apart from each other and positioned outward from the opening 81a on the right side surface of the first attachment portion 80A, and the controller 71 is fixed with screws to these screw receiving bosses 83.

The second attachment portion 80B is in a substantially rectangular plate shape when viewed from the side, with each of an upper edge portion 84a and a lower edge portion 84b bent leftward. The interval between the upper edge portion 84a and the lower edge portion 84b is set to a dimension that is approximately equal to the vertical width of the main body of the electrical box 72. The second attachment portion 80B has a substantially rectangular opening 81b provided in the center. The upper edge portion 84a and the lower edge portion 84b have a plurality of fitting flanges 85 provided at the left ends as fitting portions for fitting and holding the electrical box 72. In the present embodiment, two fitting flanges 85 are provided upright at each of an end edge (left end) of the upper edge portion 84a and an end edge (left end) of the lower edge portion 84b, spaced apart from each other in the front-rear direction. The fitting flanges 85 are inserted into flange receiving portions 86 provided on the outer surfaces of the upper and lower peripheral walls of the electrical box 72. Thus, the electrical box 72 is held and fixed to the second attachment portion 80B. Note that the first attachment portion 80A is connected to the lower edge portion 84b of the second attachment portion 80B. Therefore, the controller 71 is provided below the electrical box 72. As illustrated in FIG. 17, the electrical box 72 has two flange receiving portions 86 provided on each of the outer surfaces of the upper and lower peripheral walls, spaced apart from each other in the front-rear direction.

As illustrated in FIG. 19, the third attachment portion 80C is a plate piece bent upward from the left end of the upper edge portion 84a of the second attachment portion 80B, and the relay box 73 is fixed with screws to the left side surface thereof. The third attachment portion 80C is provided rearward of the rear fitting flange 85 in the upper edge portion 84a of the second attachment portion 80B. Therefore, as illustrated in FIG. 17, the relay box 73 is provided upward and rearward of the electrical box 72.

In this manner, the electrical bracket 80 has all the function of supporting and fixing the controller 71 to the support frame 25, the function of supporting and fixing the electrical box 72, and the function of supporting and fixing the relay box 73 to use the member in a shared manner.

Although not illustrated, a battery stay is provided rearward of the fifth leg 25e of the support frame 25 in the upper surface portion of the swivel substrate 21, and the sub-battery 74 is fixed to the upper surface portion of the battery stay. Note that the left side upright portion 26a in the left rear portion of the swivel substrate 21 is provided upright so as to surround the left side portion and the rear portion of the battery stay and protects the sub-battery 74 from the left rear. As illustrated in FIGS. 17 and 18, the battery isolator 75 is fixed with screws to the first connecting bracket 37b provided at the rear portion of the fifth leg 25e. That is, the battery isolator 75 is provided above the sub-battery 74. The gas-liquid separation tank 76 is fixed with screws to the second connecting bracket 37c provided above the first horizontal beam 25h at the rear portion of the first leg 25a. The battery isolator 75 is provided above the electrical box 72 and forward of the relay box 73.

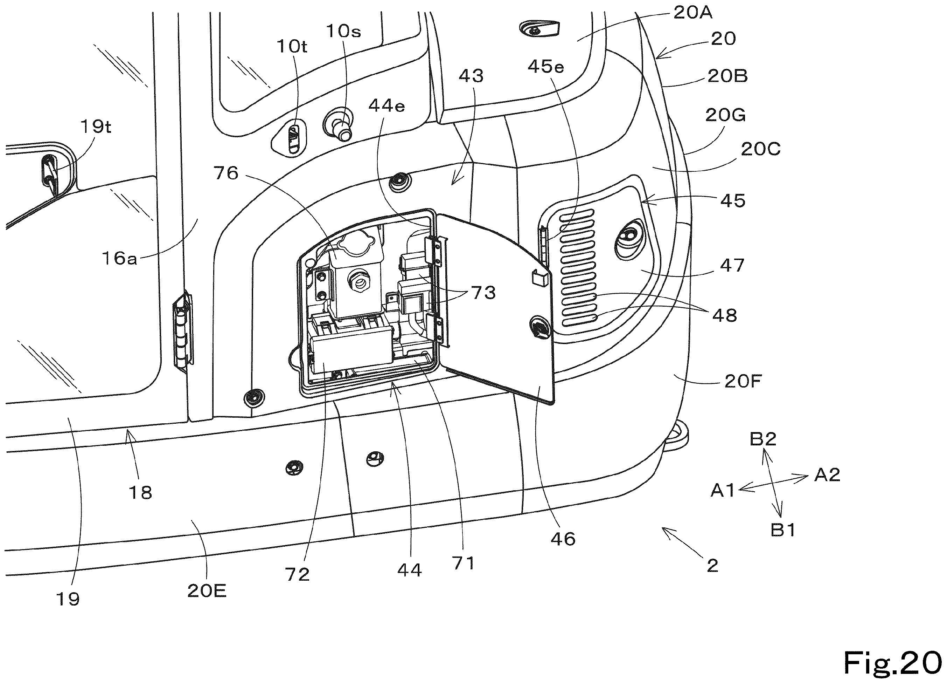

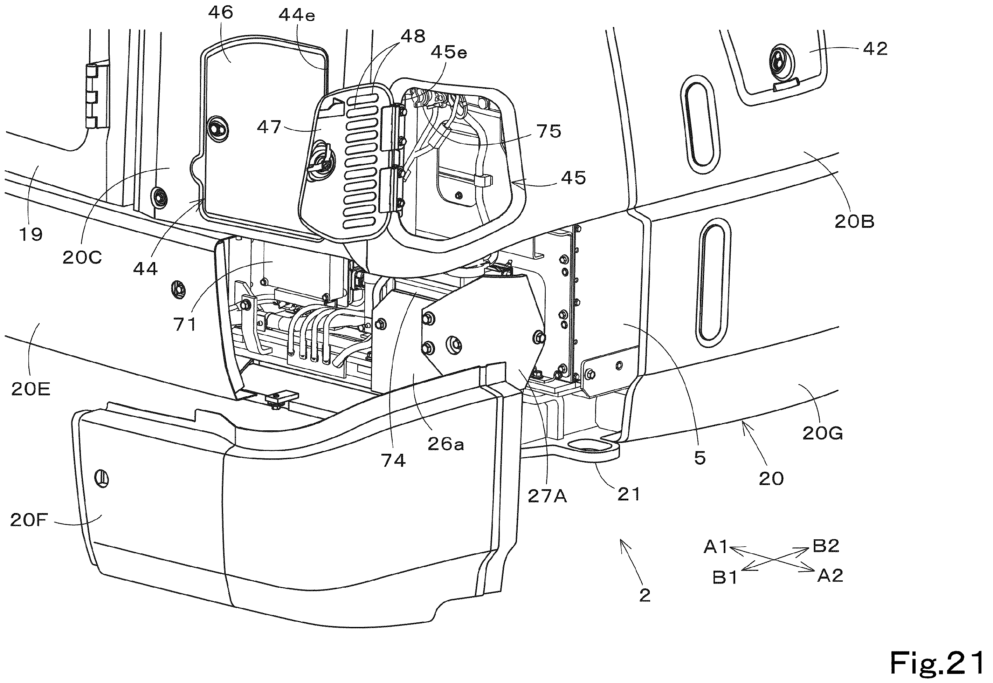

As illustrated in FIGS. 20 and 21, the controller 71 is provided inside the left rear portion bumper 20F (lower portion cover) provided under the left hood 20C (first side portion cover). As illustrated in FIG. 21, the controller 71 is also provided below the first inspection window 44 inside the left rear portion bumper 20F. In this manner, the controller 71 is provided at a position where it is not exposed to the outside even when the first inspection door 46 is opened, and is not easily accessible from the first inspection window 44.

On the other hand, as illustrated in FIG. 20, the electrical box 72, the relay box 73, and the gas-liquid separation tank 76 are provided facing the first inspection window 44 inside the left hood 20C (first side portion cover). Thus, the electrical box 72, the relay box 73, and the gas-liquid separation tank 76 can be visually checked by opening the first inspection door 46. In addition, through the first inspection window 44, it is possible to inspect and replace the electrical box 72 and the relays in the relay box 73, check the volume of the heat transfer medium in the gas-liquid separation tank 76, refill the heat transfer medium, and perform other work. That is, the electrical box 72, the relay box 73, and the gas-liquid separation tank 76 can be easily accessed through the first inspection window 44 by opening the first inspection door 46.

As illustrated in FIG. 21, the battery isolator 75 is provided facing the second inspection window 45 inside the left hood 20C (first side portion cover). Thus, the battery isolator 75 can be visually checked by opening the second inspection door 47. In addition, the battery isolator 75 can be inspected or replaced through the second inspection window 45. That is, the battery isolator 75 can be easily accessed through the second inspection window 45 by opening the second inspection door 47.

The sub-battery 74 is provided below the second inspection window 45 inside the left rear portion bumper 20F (lower portion cover). In this manner, the sub-battery 74 is provided at a position where it is not exposed to the outside even when the second inspection door 47 is opened. As illustrated in FIG. 17, the sub-battery 74 has connection terminals 74e provided in the upper portion of the main body and is attached to the upper portion of the swivel substrate 21 with the surface provided with the connection terminals 74e facing upward. Therefore, the sub-battery 74 can be visually checked by opening the second inspection door 47 and looking through the second inspection window 45 into the lower inside of the left rear portion bumper 20F, as illustrated in FIG. 21. It also becomes possible to perform work such as connecting a lead terminal of a voltage measuring instrument to the connection terminals 74e through the second inspection window 45. That is, the sub-battery 74 can be accessed through the second inspection window 45 by opening the second inspection door 47.

### <Other Embodiments>

In the above embodiment, the side portion reinforcement members (the left side portion reinforcement member 27A and the right side portion reinforcement member 27B) include a single plate material. However, similar to the central portion reinforcement member 38, they may also be configured as a double plate structure by a substrate portion and a reinforcing plate portion.

In addition, in the above embodiment, the side portion reinforcement members (the left side portion reinforcement member 27A and the right side portion reinforcement member 27B) are fixed with screws to the left and right rear upright portions (the left side upright portion 26a and the right side upright portion 26b) of the swivel substrate 21. However, the side portion reinforcement members (the left side portion reinforcement member 27A and the right side portion reinforcement member 27B) may be fixed to the inside of the exterior cover 20 as long as the impact load on the swivel base 2 from the left and right rear can be appropriately absorbed.

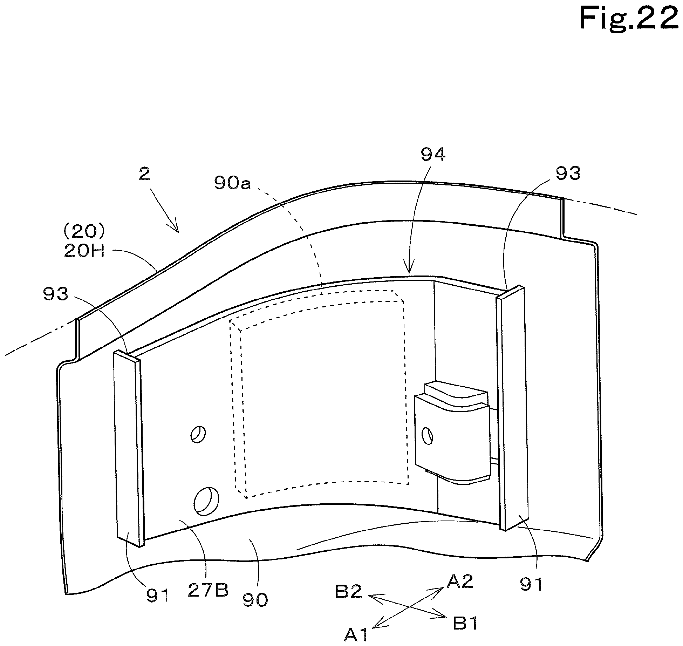

More specifically, for example, as illustrated in FIG. 22, two vertically long flat-plate-like support ribs 91 are welded and fixed to an inner surface (cover inner surface) 90 of the right rear portion bumper 20H. The support ribs 91 are provided upright at a right front position and a left rear position on the cover inner surface 90. The right side portion reinforcement member 27B is a plate material obtained by bending a thick steel plate or the like into a substantially arc shape and is supported and fixed to the two support ribs 91 with the outer surface (arc outer circumferential surface) facing the cover inner surface 90. A front end edge 92 of the right side portion reinforcement member 27B abuts against the rear surface of the front support rib 91 and is fixed thereto by welding. On the other hand, a rear end edge 93 of the right side portion reinforcement member 27B abuts against the right side surface of the rear support rib 91 and is fixed thereto by welding. The right side portion reinforcement member 27B is fixed to the two support ribs 91 as described above, so that a predetermined gap 94 is defined between the outer surface and the cover inner surface 90. In addition, the buffer member 28 similar to that in the above embodiment is provided in the gap 94. Thus, the impact load on the swivel base 2 from the rear right can be effectively absorbed. The left side portion reinforcement member 27A is configured substantially symmetrically to the right side portion reinforcement member 27B. Thus, the impact load on the swivel base 2 from the rear left can be effectively absorbed.

In addition, in the above embodiment, the central portion reinforcement member 38 is fixed with screws to the rear frame portion (the third leg 25c and the fourth leg 25d) of the support frame 25. However, the central portion reinforcement member 38 may be fixed to the inside of the exterior cover 20 as long as the impact load on the swivel base 2 from behind can be appropriately absorbed.

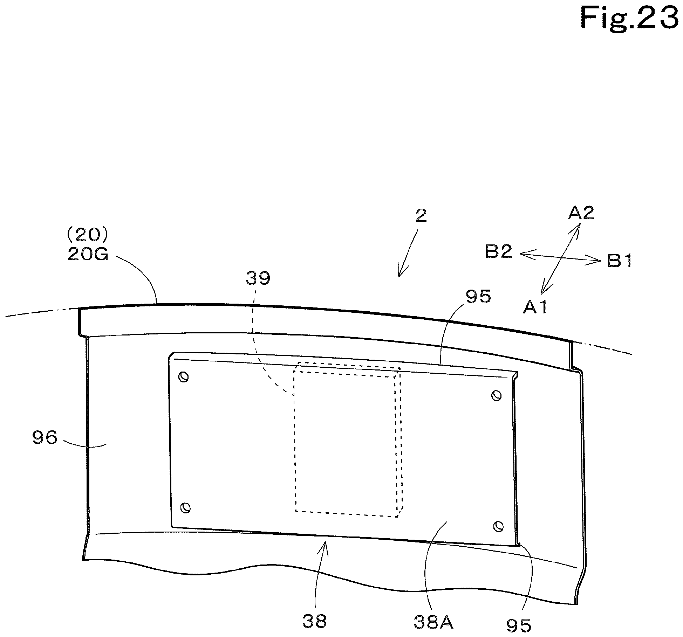

More specifically, for example, as illustrated in FIG. 23, the central portion reinforcement member 38 has the substrate portion 38A and a reinforcing plate portion (not illustrated) as in the above embodiment. The substrate portion 38A is a plate material obtained by bending the upper and lower edge portions of a thick steel plate or the like at approximately right angles, and end edge portions 95 of the bent edge portions are each abutted against an inner surface (cover inner surface) 96 of the central rear portion bumper 20G and fixed thereto by welding. Although not illustrated, a predetermined gap is defined between the rear surface portion of the reinforcing plate portion and the cover inner surface 90. Furthermore, the buffer member 28 similar to that in the above embodiment is provided in the gap. Thus, the impact load on the swivel base 2 from behind can be effectively absorbed.

### <Effects>

Thus, a swivel working machine 1 according to one or more embodiments described above includes a swivel base 2, a working device 4 provided in front of the swivel base 2, a first electrical component including an electrical box 72, and a second electrical component including a sub-battery 74, the first electrical component and the second electrical component are provided at a first side portion 2L of the swivel base 2, and a first side portion cover 20C, which is an exterior cover 20 of the first side portion 2L, includes a first inspection window 44 and a second inspection window 45, the first inspection window 44 being configured to allow inspection of the first electrical component, the second inspection window 45 being configured to allow inspection of the second electrical component.

With this configuration, the operator can easily access electrical components such as the electrical box 72 and the sub-battery 74 from outside the swivel base 2 through the first inspection window 44 and the second inspection window 45. Accordingly, maintainability significantly improves.

The first inspection window 44 and the second inspection window 45 are arranged in the front-rear direction on the first side portion cover 20C. With this configuration, the operator can access electrical components such as the electrical box 72 and the sub-battery 74 at the same side portion (first side portion) 2L of the swivel base 2. Accordingly, maintainability further improves.

The first side portion cover 20C includes a first inspection door 46 and a second inspection door 47, the first inspection door 46 being operable to open and close the first inspection window 44, the second inspection door 47 being operable to open and close the second inspection window 45. The first inspection door 46 is pivotally supported on a side frame portion 44e of the first inspection window 44 that is closer to the second inspection window 45 than the opposite side frame portion is. The second inspection door 47 is pivotally supported on a side frame portion 45e of the second inspection window 45 that is closer to the first inspection window 44 than the opposite side frame portion is. With this configuration, the front inspection door (e.g., the first inspection door 46) can be opened rearward (toward the second inspection window 45). Accordingly, the operator can easily access the front inspection window (e.g., the first inspection window 44) from the front of the swivel base 2 at the first side portion 2L side. On the other hand, the rear inspection door (e.g., the second inspection door 47) can be opened forward (toward the first inspection window 44). Accordingly, the operator can easily access the rear inspection window (e.g., the second inspection window 45) from behind the swivel base 2.

A swivel working machine 1 according to one or more embodiments described above includes an operator's seat 8 provided on the swivel base 2 and a protection mechanism 10 having an entrance 18 at the first side portion 2L to house the operator's seat 8, and the first inspection window 44 and the second inspection window 45 is provided rearward of the entrance 18. With this configuration, the operator seated on the operator's seat 8 can quickly access the first inspection window 44 and the second inspection window 45 after getting off the working machine through the entrance 18. Accordingly, maintainability is further improved.

The protection mechanism 10 includes an entrance door 19 to open and close the entrance 18, the entrance door 19 is configured to open rearward from a closed position in which the entrance 18 is closed, the first side portion cover 20C includes a recessed surface portion 43 to avoid contact with the entrance door 19 that is fully opened, the second inspection window 45 is provided rearward of the recessed surface portion 43, and the first inspection window 44 is provided in the recessed surface portion 43. With this configuration, even when the entrance door 19 is fully opened, the operator can access electrical components such as the sub-battery 74 through the second inspection window 45. Accordingly, maintainability is further improved. Moreover, with this configuration, when the entrance door 19 is fully opened, the first inspection window 44 is covered with the entrance door 19 from the first side portion 2L side. Accordingly, the operator's access to electrical components such as the electrical box 72 with the entrance door 19 open can be prevented or reduced.

The second inspection window 45 includes a ventilation opening 48 via which an interior and an exterior of the first side portion cover 20C are in communication with each other. With this configuration, outside air can be introduced into electrical components such as the sub-battery 74 through the ventilation opening 48 in the second inspection door 47 of the second inspection window 45, and hot air around the electrical components such as the sub-battery 74 can be released to the outside of the swivel base 2 through the ventilation opening 48.

A gas-liquid separation tank 76 to store a heat transfer medium for heating is provided, and the gas-liquid separation tank 76 is located at the first side portion 2L of the swivel base 2 such that the gas-liquid separation tank 76 faces toward the first inspection window 44. With this configuration, the operator can also easily access the gas-liquid separation tank 76 from outside the swivel base 2 through the first inspection window 44.

The first side portion cover 20C is removably fixed to a support frame 25 provided upright on the swivel base 2. With this configuration, when it is difficult to perform work through the first inspection window 44 or the second inspection window 45, the first side portion cover 20C can be removed to allow access to electrical components inside the swivel base 2. Accordingly, maintainability is further improved.

An upper portion cover 20A of the swivel base 2 is removably fixed to the support frame 25, and an upper fixing portion 33 between the first side portion cover 20C and the support frame 25 is provided at a position covered with the upper portion cover 20A from above. With this configuration, when removing the first side portion cover 20C from the support frame 25, it is necessary to remove the upper portion cover 20A from the support frame 25 first. This makes it possible to prevent an unexpected third party's access to the inside of the swivel base 2.

A swivel working machine 1 according to one or more embodiments described above includes a battery unit 5, an electric motor 6 to be driven by electric power output from the battery unit 5, and a hydraulic pump 7 to deliver hydraulic fluid in response to driving of the electric motor 6. This achieves a swivel working machine 1 to be driven by electric power.

A swivel working machine 1 according to one or more embodiments described above includes a swivel base 2, a battery unit 5, a working device 4 to be driven by electric power output from the battery unit 5 and provided in front of the swivel base 2, a controller 71 to control the electric power to be output from the battery unit 5, and an electrical box 72 to house electrical equipment, and the controller 71 and the electrical box 72 are attached to the support frame 25 provided upright on a swivel base 2 via a single bracket (electrical bracket) 80.

With this configuration, the controller 71 and the electrical box 72 which are attached to the bracket 80 in advance, can be attached to the support frame 25 of the swivel base 2. Accordingly, the ease of assembly is significantly improved. Moreover, this does not require separate brackets for the controller 71 and the electrical box 72. Accordingly, the number of components and the number of assembly steps can be reduced.

The bracket 80 includes a first attachment portion 80A and a second attachment portion 80B, the first attachment portion 80A supporting the controller 71, the second attachment portion 80B supporting the electrical box 72, and the first attachment portion 80A is provided below the second attachment portion 80B. With this configuration, the electrical box 72, which requires frequent maintenance such as inspection or replacement, can be provided at an upper portion of the support frame 25 where the operator can easily perform work, whereas the controller 71, which requires less frequent maintenance, can be provided at a lower portion of the support frame 25. Accordingly, maintainability is improved.

The second attachment portion 80B includes a fitting portion (fitting flange) 85 fitting and holding the electrical box 72. With this configuration, the electrical box 72 can be fixed and held to the bracket 80 more easily than in a case where the electrical box 72 is fixed to the bracket 80 with fixing members such as fixing screws. Accordingly, the ease of assembly and maintainability are further improved. Also, the number of components and the number of assembly steps can be further reduced.

A swivel working machine 1 according to one or more embodiments described above includes a relay box 73 to house a relay, and a bracket 80 includes a third support portion 80C to support the relay box 73. With this configuration, the relay box 73 can also be attached to the support frame 25 of the swivel base 2 after attached to the bracket 80 together with the controller 71 and the electrical box 72. Accordingly, the ease of assembly is further improved. Also, the number of components and the number of assembly steps can be further reduced.

The first attachment portion 80A includes, at a first side portion (left side surface) and a second side portion (right side surface), attachment portions (screw receiving bosses) 82 and 83 to each of which a controller 71 is attachable. With this configuration, a plurality of the controllers 71 can be attached to the support frame 25 of the swivel base 2 after being attached to the bracket 80 together with the electrical box 72. Accordingly, the ease of assembly is further improved. Also, the number of components and the number of assembly steps can be further reduced.

The controller 71 and the electrical box 72 are provided at a first side portion (left side portion) 2L of the swivel base 2. With this configuration, when performing maintenance work such as inspection or replacement of the electrical box 72, a relatively large work space can be secured around the operator. Accordingly, maintainability is improved.

The first side portion cover (left hood) 20C of the swivel base 2 includes an inspection window (first inspection window) 44 to allow inspection of the electrical box 72. With this configuration, the operator can access the electrical box 72 from outside the swivel base 2 through the inspection window 44. Accordingly, maintainability is significantly improved.

The first side portion cover (left hood) 20C of the swivel base 2 is removably fixed to the support frame 25, and the electrical box 72 is provided inside the first side portion cover 20C. With this configuration, maintenance work such as inspection or replacement of the electrical box 72 can be performed by removing the first side portion cover 20C from the support frame 25. Accordingly, maintainability can be improved.

The upper portion cover (upper hood) 20A of the swivel base 2 is removably fixed to the support frame 25, and an upper fixing portion (third cover flange) 33c of the support frame 25 for fixing the first side portion cover (left hood) 20C is provided at a position covered with the upper hood 20A from above. With this configuration, when removing the first side portion cover 20C from the support frame 25, it is necessary to remove the upper portion cover 20A from the support frame 25 first. Accordingly, an unexpected third party's access to the controller 71 can be restricted.

The controller 71 is positioned such that the controller 71 faces the inner side of a lower portion cover (left rear portion bumper) 20F provided under the first side portion cover (left hood) 20C. With this configuration, even when the first side portion cover 20C is removed from the support frame 25, the controller 71 is not exposed to the outside of the swivel base 2. Accordingly, an unexpected third party's access to the controller 71 can be more effectively restricted.

A swivel working machine 1 according to one or more embodiments described above includes an electric motor 6 to be driven by electric power output from a battery unit 4, a hydraulic pump 7 to deliver hydraulic fluid in response to driving of the electric motor 6, and a hydraulic actuator M to be driven by the hydraulic pressure of hydraulic fluid to actuate a working device 4, and a controller 71 controls operation of the electric motor 6. That is, with the swivel working machine 1 according to one or more embodiments described above, in the swivel working machine 1 in which the working device 4 is hydraulically driven by the electric power, the number of components and the number of assembly steps can be reduced.

A swivel working machine 1 according to one or more embodiments described above includes a swivel base 2, a working device 4 provided in front of the swivel base 2, a battery unit 5, an electric motor 6 to be driven by electric power output from the battery unit 5, a hydraulic pump 7 to deliver hydraulic fluid in response to driving of the electric motor 6, an inverter 51B to regulate electric power to be output to the electric motor 6, a harness 54 to transmit electric power and connect the inverter 51B and the electric motor 6 to each other, an exterior cover 20 to cover the battery unit 5, the electric motor 6, the hydraulic pump 7, the inverter 51B, and the harness 54, and a support frame 25 provided upright on the swivel base 2 to support the exterior cover 20, and the harness 54 is fixed to the support frame 25.

With this configuration, the harness 54 is unlikely to swing due to vibrations during work to contact components such as the battery unit 5 and the inverter 51B or to be directly subjected to an external impact. This achieves a configuration in which damage to the harness 54 can be avoided.

The harness 54 is guided along the inner surface of the rear portion cover (rear hood) 20B of the swivel base 2. With this configuration, the harness 54 can be efficiently guided to the swivel base 2 without passing through a complicated route. Also, the harness 54 is even less likely to contact the battery unit 5 and the like. Accordingly, damage to the harness 54 can be effectively avoided.

The battery unit 5 is provided in a rear room R provided at the rear portion of the swivel base 2, the support frame 25 includes a rear frame portion (third leg 25c, fourth leg 25d) provided upright in the rear portion of the rear room R, and the harness 54 is guided forward of the rear frame portion (third leg 25c, fourth leg 25d) in the rear room R. With this configuration, even when an external impact is applied to the swivel base 2 from behind, the impact is dispersed by the support frame 25 and is unlikely to be directly transmitted to the harness 54. Accordingly, damage to the harness 54 can be more effectively avoided.

The battery unit 5 is provided at the rear portion of the swivel base 2, the electric motor 6 is provided at one side of the battery unit 5 on the swivel base 2, the inverter 51B is provided above the battery unit 5, and the harness 54 is guided from the inverter 51B, via the space located upward and rearward of the battery unit 5, to the electric motor 6. With this configuration, the harness 54 can be guided from the inverter 51B to the electric motor 6 along a more appropriate route. Also, the harness 54 is unlikely to contact the battery unit 5 or the like. Accordingly, damage to the harness 54 can be effectively avoided.

In addition, the harness 54 is fixed via a clamp 56 to a support frame 25 provided upright on the swivel base 2. With this configuration, the harness 54 is more stably fixed to the support frame 25. Accordingly, the harness 54 is unlikely to contact the battery unit 5 or the like, and damage to the harness 54 can be more reliably avoided.

In addition, the battery unit 5 is provided in a rear room R provided at the rear portion of the swivel base 2, the electric motor 6 is provided at one side of the battery unit 5 in the rear room R, the support frame 25 includes a rear frame portion (third leg 25c, fourth leg 25d) and a side frame portion (right frame portion) 25r, the rear frame portion being provided upright in a rear portion of the rear room R, the side frame portion being provided upright in a side portion of the rear room R where the electric motor 6 is provided, and the clams 56 includes a first clamp 56A and a second clamp 56B, the first clamp 56A being fixed to the rear frame portion (third leg 25c, fourth leg 25d), the second clamp 56B being fixed to a side frame portion (right frame portion) 25r. With this configuration, the harness 54 is firmly fixed to the support frame 25 such that the harness 54 is guided from the rear portion of the support frame 25 toward the electric motor 6. Accordingly, the harness 54 is unlikely to contact the battery unit 5 and the like, and damage to the harness 54 can be more reliably avoided.

The first clamp 56A is fixed with a fastening member (fixing screw) 67 to a clamp attachment portion (clamp bracket) 35a of the rear frame portion (third leg 25c, fourth leg 25d) from behind. With this configuration, the first clamp 56A can be attached and detached from behind the support frame 25. Accordingly, the ease of assembly is improved.

The rear frame portion includes a pair of rear frame portions (a third leg 25c and a fourth leg 25d) provided upright at the rear portion of the swivel base 2 and spaced apart from each other in a lateral direction, and a plurality of the first clamps 56A are provided at the respective rear frame portions (the third leg 25c and the fourth leg 25d) at both the left and right sides. With this configuration, the harness 54 can be stably fixed at the rear portion of the swivel base 2 such that the harness 54 extends in the left-right direction. Accordingly, the harness 54 is even less likely to contact the battery unit 5 and the like. Thus, damage to the harness 54 can be more reliably avoided.

The clamp 56 includes a pair of pressing members 57a and 57b abutting against the outer circumferential surface of the harness 54 in a radially opposed arrangement, and the pressing members 57a and 57b each include an elastic material. With this configuration, the harness 54 is more firmly fixed to the support frame 25. Accordingly, the harness 54 is unlikely to interfere with the battery unit 5 and the like, and damage to the harness 54 can be more reliably avoided.

The pressing members 57a and 57b include concave surface portions 61 each abutting against and extending along the outer circumferential surface. With this configuration, the harness 54 is more firmly fixed and held with the clamps 56. Accordingly, the harness 54 can be more stably fixed to the support frame 25.

In addition, the concave surface portions 61 are arranged adjacent to each other in an up-down direction, and the clamps 56 fix, with the concave surface portions 61, the electric wires of the harness 54 to be spaced from each other in the up-down direction. With this configuration, the plurality of electric wires of the harness(es) 54 are fixed and held vertically spaced apart from each other with the clamps 56. Accordingly, damage due to contact between the electric wires can be reliably avoided.

A swivel working machine 1 according to one or more embodiments described above includes a swivel base 2, a battery unit 5 provided at a rear portion of the swivel base 2, a working device 4 provided in front of the swivel base 2 and to be driven by electric power output from the battery unit 5, a rear portion exterior cover (left rear portion bumper 20F, central rear portion bumper 20G, right rear portion bumper 20H) provided at the rear portion of the swivel base 2 to cover the side, facing rearward of the machine body, of the space in which the battery unit 5 is provided, and a reinforcement member (left side portion reinforcement member 27A, right side portion reinforcement member 27B, central portion reinforcement member 38) provided inward of the rear portion exterior cover (left rear portion bumper 20F, central rear portion bumper 20G, right rear portion bumper 20H) with respect to the machine body to prevent or reduce deformation of the rear portion exterior cover (left rear portion bumper 20F, central rear portion bumper 20G, right rear portion bumper 20H) inward with respect to the machine body due to an external force.

With this configuration, even when an external impact is applied to the rear portion of the swivel base 2, the impact load is absorbed and dispersed by the reinforcement member(s) 20F, 20G, and 20H. Accordingly, deformation of the rear portion exterior covers 20F, 20G, and 20H can be prevented or reduced, and also, the impact load on the devices mounted on the swivel base 2, such as the battery unit 5, can be reduced.

A swivel working machine 1 according to one or more embodiments described above includes a buffer member 28 39 are provided between a reinforcement member (left side portion reinforcement member 27A, right side portion reinforcement member 27B, central portion reinforcement member 38) and a rear portion exterior cover (left rear portion bumper 20F, central rear portion bumper 20G, right rear portion bumper 20H). With this configuration, the impact load applied to the rear portion of the swivel base 2 can be further absorbed by the buffer members 28 and 39. Accordingly, deformation of the rear portion exterior covers 20F, 20G, and 20H can be prevented or reduced, and also, the impact load on the devices mounted on the swivel base 2 can be further reduced.

The rear portion exterior cover (left rear portion bumper 20F, central rear portion bumper 20G, right rear portion bumper 20H) includes a sheet metal or resin. With this configuration, the impact load applied to the rear portion of the swivel base 2 can be absorbed by the rear portion exterior covers 20F, 20G, and 20H. Accordingly, the impact load on the devices mounted on the swivel base 2 can be further reduced.

The reinforcement member includes a central portion reinforcement member 38 and a pair of side portion reinforcement members 27A and 27B, the central portion reinforcement member 38 being provided substantially at the center of the rear portion of the swivel base 2 in the machine body width direction (left-right direction), the pair of side portion reinforcement members 27A and 27B being provided at the rear portion of the swivel base 2 and spaced apart from each other in the machine body width direction (left-right direction). With this configuration, the impact load applied to the rear portion of the swivel base 2 from the rear center or the left and right rear can be absorbed and dispersed by the central portion reinforcement member 38 and the side portion reinforcement members 27A and 27B. Accordingly, the impact load on the devices mounted on the swivel base 2 can be further reduced.

A swivel working machine 1 according to one or more embodiments described above includes a support frame 25 provided upright on a swivel base 2 to support a rear portion exterior cover (left rear portion bumper 20F, central rear portion bumper 20G, right rear portion bumper 20H), and a central portion reinforcement member 38 is fixed to a rear portion of the support frame 25. With this configuration, the impact load applied to the rear portion center of the swivel base 2 from behind can be absorbed by the central portion reinforcement member 38 and dispersed to the support frame 25. Accordingly, the impact load on the devices mounted on the swivel base 2 can be more reliably reduced.

The support frame 25 includes a rear frame portion (third leg 25c, fourth leg 25d) provided upright rearward of a battery unit 5 on the swivel base 2, and the central portion reinforcement member 38 is fixed to a rear portion of the rear frame portion (third leg 25c, fourth leg 25d) and provided rearward of the battery unit 5. With this configuration, the impact load applied to the center of the rear portion of the swivel base 2 from behind can be received by the central portion reinforcement member 38 and dispersed to the rear frame portions 25c and 25d of the support frame 25. Accordingly, the impact load on the battery unit 5 provided at the rear portion of the swivel base 2 can be more reliably reduced.

The reinforcement member (left side portion reinforcement member 27A, right side portion reinforcement member 27B, central portion reinforcement member 38) includes a substrate portion 38A and a reinforcing plate portion 38B, the substrate portion 38A being fixed to a predetermined attachment portion, the reinforcing plate portion 38B being provided on the rear portion of the substrate portion 38A. With this configuration, the impact load applied to the swivel base 2 can be absorbed and dispersed by the substrate portion 38A and the reinforcing plate portion 28B. Accordingly, the impact load on the devices mounted on the swivel base 2 can be further reduced.

The side portion reinforcement members (left side portion reinforcement member 27A, right side portion reinforcement member 27B) are fixed to upright portions (left side upright portion 26a, right side upright portion 26b) provided upright at left and right rear corner portions of the swivel base 2, respectively. With this configuration, the impact load applied to the swivel base 2 from the left and right rear can be absorbed by the left and right side portion reinforcement members 27A and 27B and dispersed to the swivel base 2 via the upright portions 26a and 26b. Accordingly, the impact load on the devices mounted on the swivel base 2 can be more reliably reduced.

A sub-battery 74 is provided at the first side portion (left side portion) 2L, which is one of opposite side portions in the machine body width direction, of the rear portion of the swivel base 2, and one of the side portion reinforcement members (left side portion reinforcement member) 27A that is located at a first side (left side), which is one of opposite sides in the machine body width direction, is located rearward of the sub-battery 74. With this configuration, the impact load applied to the swivel base 2 from the first side (left side) is absorbed and dispersed by the side portion reinforcement member 27A on the first side. Accordingly, the impact load on the sub-battery 74 provided at the first side portion 2L of the swivel base 2 can be more reliably reduced.

A swivel working machine 1 according to one or more embodiments described above includes an electric motor 6 to be driven by electric power output from a battery unit 5, the electric motor 6 is provided at a second side portion (right side portion) 2R, which is one of opposite side portions in a machine body width direction, of a rear portion of the swivel base 2, and one of the side portion reinforcement members (right side portion reinforcement member) 27B that is at a second side (right side), which is one of opposite sides in the machine body width direction, is located rearward of the electric motor 6. With this configuration, the impact load applied to the swivel base 2 from the second side (right side) is absorbed and dispersed by the side portion reinforcement member 27B on the second side. Accordingly, the impact load on the electric motor 6 provided at the second side portion 2R of the swivel base 2 can be more reliably reduced.

A swivel working machine 1 according to one or more embodiments described above includes a hydraulic pump 7 to deliver hydraulic fluid in response to driving of an electric motor 6, and a hydraulic actuator M to be driven by the hydraulic pressure of hydraulic fluid to actuate a working device 4, the hydraulic pump 7 is provided at a second side portion (right side portion) 2R, and the one of the side portion reinforcement members (right side portion reinforcement member) 27B that is at a second side (right side) is provided rearward of the electric motor 6 and the hydraulic pump 7. With this configuration, the impact load applied to the swivel base 2 from the second side (right side) is absorbed and dispersed by the side portion reinforcement member 27B at the second side. Accordingly, the impact load on the electric motor 6 and the hydraulic pump 7 provided at the second side portion 2R of the swivel base 2 can be more reliably reduced.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

The above description of embodiments discusses examples in which the present invention is applied to a swivel working machine such as a backhoe. However, the present invention is not limited to such. The present invention is applicable to other construction machines such as a wheel loader, a compact track loader, and a skid-steer loader and applicable to agricultural machines such as a tractor, a combine, a rice transplanter, and a lawn mower.

### Reference Signs List

1 swivel working machine
2 swivel base
2L left side portion (first side portion)
4 working device
5 battery unit
6 electric motor
7 hydraulic pump
10 protection mechanism
20 exterior cover
20B rear hood (rear portion cover)
20C left hood (first side portion cover)
20F left rear portion bumper (rear portion exterior cover)
20G center rear portion bumper (rear portion exterior cover)
20H right rear portion bumper (rear portion exterior cover)
25 support frame
27A left side portion reinforcement member (reinforcement member)
27B right side portion reinforcement member (reinforcement member)
28 central portion reinforcement member (reinforcement member)
44 first inspection window
45 second inspection window
51B inverter
54 harness
71 controller
72 electrical box (first electrical component)
74 sub-battery (second electrical component)
80 electrical bracket (bracket)

## Claims

1. A swivel working machine comprising:
a swivel base;
a battery unit provided at a rear portion of the swivel base;
a working device provided in front of the swivel base and to be driven by electric power output from the battery unit;
a rear portion exterior cover provided at the rear portion of the swivel base to cover a side, facing rearward of a machine body, of a space in which the battery unit is provided; and
a reinforcement member provided inward of the rear portion exterior cover with respect to the machine body to prevent or reduce deformation of the rear portion exterior cover inward with respect to the machine body due to an external force.

2. The swivel working machine according to claim 1, wherein a buffer member is provided between the reinforcement member and the rear portion exterior cover.

3. The swivel working machine according to claim 1 or 2, wherein the rear portion exterior cover includes a sheet metal or resin.

4. The swivel working machine according to any one of claims 1 to 3, wherein the reinforcement member includes a central portion reinforcement member and a pair of side portion reinforcement members, the central portion reinforcement member being provided substantially at a center of the rear portion of the swivel base in a machine body width direction, the pair of side portion reinforcement members being provided at the rear portion of the swivel base and spaced apart from each other in the machine body width direction.

5. The swivel working machine according to claim 4, further comprising a support frame provided upright on the swivel base to support the rear portion exterior cover; wherein
the central portion reinforcement member is fixed to a rear portion of the support frame.

6. The swivel working machine according to claim 5, wherein
the support frame includes a rear frame portion provided upright rearward of the battery unit on the swivel base; and
the central portion reinforcement member is fixed to a rear portion of the rear frame portion and provided rearward of the battery unit.

7. The swivel working machine according to any one of claims 4 to 6, wherein the reinforcement member includes a substrate portion and a reinforcing plate portion, the substrate portion being fixed to a predetermined attachment portion, the reinforcing plate portion being provided on a rear portion of the substrate portion.

8. The swivel working machine according to any one of claims 4 to 7, wherein the side portion reinforcement members are fixed to upright portions provided upright at left and right rear corner portions of the swivel base, respectively.

9. The swivel working machine according to any one of claims 4 to 8, wherein a sub-battery is located at a first side portion, which is one of opposite side portions in the machine body width direction, of the rear portion of the swivel base, and
one of the side portion reinforcement members that is located at a first side, which is one of opposite sides in the machine body width direction, is located rearward of the sub-battery.

10. The swivel working machine according to any one of claims 4 to 9, further comprising an electric motor to be driven by the electric power output from the battery unit; wherein
the electric motor is located at a second side portion, which is one of opposite side portions in the machine body width direction, of the rear portion of the swivel base; and
one of the side portion reinforcement members that is at a second side, which is one of opposite sides in the machine body width direction, is located rearward of the electric motor.

11. The swivel working machine according to claim 10, further comprising:
a hydraulic pump to deliver hydraulic fluid in response to driving of the electric motor; and
a hydraulic actuator to be driven by a hydraulic pressure of the hydraulic fluid to actuate the working device; wherein
the hydraulic pump is located at the second side portion, and
the one of the side portion reinforcement members that is at the second side is provided rearward of the electric motor and the hydraulic pump.

12. The swivel working machine according to any one of claims 1 to 11, further comprising:
an electric motor to be driven by the electric power output from the battery unit;
a hydraulic pump to deliver hydraulic fluid in response to driving of the electric motor;
an inverter to regulate electric power to be output to the electric motor;
a harness to transmit electric power and connect the inverter and the electric motor to each other; and
a support frame provided upright on the swivel base to support the rear portion exterior cover; wherein
the rear portion exterior cover covers the side, facing rearward of the machine body, of the space in which the battery unit, the electric motor, the hydraulic pump, the inverter, and the harness are provided; and
the harness is fixed to the support frame.

13. The swivel working machine according to claim 12, wherein the harness is guided along an inner surface of a rear portion cover of the swivel base.

14. The swivel working machine according to claim 12 or 13, wherein
the battery unit is provided in a rear room provided at the rear portion of the swivel base;
the support frame includes a rear frame portion provided upright in a rear portion of the rear room; and
the harness is guided forward of the rear frame portion in the rear room.

15. The swivel working machine according to any one of claims 12 to 14, wherein
the battery unit is provided at the rear portion of the swivel base;
the electric motor is provided at one side of the battery unit on the swivel base,
the inverter is provided above the battery unit; and
the harness is guided from the inverter, via a space located upward and rearward of the battery unit, to the electric motor.

16. The swivel working machine according to any one of claims 12 to 15, wherein
the harness is fixed via a clamp to the support frame provided upright on the swivel base;
the battery unit is provided in a rear room provided at the rear portion of the swivel base;
the electric motor is provided at one side of the battery unit in the rear room;
the support frame includes a rear frame portion and a side frame portion, the rear frame portion being provided upright in a rear portion of the rear room, the side frame portion being provided upright in a side portion of the rear room where the electric motor is provided; and
the clamp includes a first clamp and a second clamp, the first clamp being fixed to the rear frame portion, the second clamp being fixed to the side frame portion.

17. The swivel working machine according to claim 16, wherein
the clamp includes a pair of pressing members abutting against an outer circumferential surface of the harness in a radially opposed arrangement; and
the pressing members each include an elastic material.

18. The swivel working machine according to claim 17, wherein
the pressing members include concave surface portions each abutting against and extending along the outer circumferential surface; and
the concave surface portions are arranged adjacent to each other in an up-down direction, and the clamp fixes, with the concave surface portions, electric wires of the harness to be spaced from each other in the up-down direction.

19. The swivel working machine according to any one of claims 1 to 18, further comprising:
a first electrical component including an electrical box; and
a second electrical component including a sub-battery; wherein
the first electrical component and the second electrical component are provided at a first side portion of the swivel base; and
a first side portion cover, which is an exterior cover at the first side portion, includes a first inspection window and a second inspection window, the first inspection window being configured to allow inspection of the first electrical component, the second inspection window being configured to allow inspection of the second electrical component.

20. The swivel working machine according to any one of claims 1 to 19, further comprising:
a controller to control the electric power to be output from the battery unit; and
an electrical box to house electrical equipment; wherein
the controller and the electrical box are attached to a support frame provided upright on the swivel base via a single bracket.
